# EUROPEAN PATENT APPLICATION

(11) **EP 4 701 125 A1**
(43) Date of publication of application: **25.02.2026**
(21) Application number: 23933524.3
(22) Date of filing: 21.04.2023
(51) Int. Cl.: H04L 9/08, H04L 9/32

(54) **KEY EXCHANGE METHOD, APPARATUS, DEVICE, AND STORAGE MEDIUM**

(71) Applicant: Beijing Xiaomi Mobile Software Co., Ltd., Beijing 100085 (CN); Xiaomi EV Technology Co., Ltd., Beijing 100176 (CN)
(72) Inventor: QIAO, Guangjun, Beijing 100085 (CN); CHI, Yubo, Beijing 100085 (CN); YU, Fan, Beijing 100176 (CN); GAO, Yufei, Beijing 100085 (CN); YU, Lei, Beijing 100085 (CN); SONG, Tian, Beijing 100085 (CN); CHEN, Wenxuan, Beijing 100085 (CN)
(74) Representative: Gunzelmann, Rainer
(86) International application number: PCT/CN2023/089943
(87) International publication number: WO 2024/216648

(57) **Abstract**

The present disclosure provides a key exchange method, an apparatus, a device, and a storage medium. The method comprises: generating a first key pair, wherein the first key pair comprises a first public key and a first private key; sending the first public key to a server; and receiving a first public key CA sent by the server, wherein the first public key CA comprises a second public key in a second key pair, the second key pair is generated by a second device, the second key pair further comprises a second private key, and the second device is a device requiring communication with a first device. The method of the present disclosure is high in communication security, low in application limitation, high in flexibility and high in stability, improves the user experience, expands the application range, and is low in operation complexity.

## Description

### TECHNICAL FIELD

The disclosure relates to a field of communication technologies, in particular to a key exchange method, an apparatus, a device and a storage medium.

### BACKGROUND

In communication systems, communication keys are usually assigned to respective devices to be communicated. This enables encrypted communication between these respective devices based on the communication keys, thereby ensuring communication security.

### SUMMARY

The disclosure provides a key exchange method, an apparatus, a device and a storage medium.

According to a first aspect, embodiments of the disclosure provide a key exchange method. The method includes:
generating a first key pair including a first public key and a first private key;
sending the first public key to a server; and
receiving a first public key certificate sent by the server, in which the first public key certificate includes a second public key in a second key pair, the second key pair is generated by a second device and includes the second public key and a second private key, and the second device is a device to be communicated with a first device.

According to a second aspect, embodiments of the disclosure provide a key exchange method. The method includes:
receiving a first public key sent by a first device, in which the first public key belongs to a first key pair, the first key pair includes the first public key and a first private key and is generated by the first device;
receiving a second public key sent by a second device, in which the second public key belongs to a second key pair, the second key pair includes the second public key and a second private key and is generated by the second device, and the second device is a device to be communicated with the first device;
generating at least one of a first public key certificate, a second public key certificate or a third public key certificate, in which the first public key certificate includes the second public key in the second key pair; the second public key certificate includes a fourth public key in a fourth key pair, and the fourth key pair includes the fourth public key and a fourth private key; and the third public key certificate includes the first public key, and the third public key certificate is obtained after being signed with the fourth private key; and
sending at least one of the first public key certificate, the second public key certificate or the third public key certificate to the first device and/or the second device.

According to a third aspect, embodiments of the disclosure provide a key exchange method. The method includes:
generating a second key pair, in which the second key pair includes a second public key and a second private key;
sending the second public key to a server; and
receiving a second public key certificate and a third public key certificate, in which the second public key certificate includes a fourth public key in a fourth key pair, the fourth key pair includes the fourth public key and a fourth private key, and the fourth key pair is generated by the server, the third public key certificate includes a first public key in a first key pair, and the first key pair is generated by a first device, the first device is a device to be communicated with a second device, and the third public key certificate is obtained after being signed with the fourth private key.

According to a fourth aspect, embodiments of the disclosure provide a key exchange method. The method includes:
receiving a key request message sent by a server;
generating a sixth key pair, in which the sixth key pair includes a sixth public key and a sixth private key;
sending the sixth public key to the server; and
receiving a first public key certificate sent by the server, in which the first public key certificate includes a second public key in a second key pair, the second key pair is generated by a second device and includes the second public key and a second private key, and the second device is a device to be communicated with a third device.

According to a fifth aspect, embodiments of the disclosure provide a communication apparatus. The apparatus includes:
a processing module, configured to generate a first key pair including a first public key and a first private key;
a transceiver module, configured to send the first public key to a server; and
the transceiver module, further configured to receive a first public key certificate sent by the server, in which the first public key certificate includes a second public key in a second key pair, the second key pair is generated by a second device and includes the second public key and a second private key, and the second device is a device to be communicated with a first device.

According to a sixth aspect, embodiments of the disclosure provided a communication apparatus. The apparatus includes:
a transceiver module, configured to receive a first public key sent by a first device, in which the first public key belongs to a first key pair, the first key pair includes the first public key and a first private key and is generated by the first device;
the transceiver module, further configured to receive a second public key sent by a second device, in which the second public key belongs to a second key pair, the second key pair includes the second public key and a second private key and is generated by the second device, and the second device is a device to be communicated with the first device;
a processing module, configured to generate at least one of a first public key certificate, a second public key certificate or a third public key certificate, in which the first public key certificate includes the second public key in the second key pair, the second public key certificate includes a fourth public key in a fourth key pair, and the fourth key pair includes the fourth public key and a fourth private key, and the third public key certificate includes the first public key, and the third public key certificate is obtained after being signed with the fourth private key; and
the transceiver module, further configured to send at least one of the first public key certificate, the second public key certificate or the third public key certificate to the first device and/or the second device.

According to a seventh aspect, embodiments of the disclosure provide a communication apparatus. The apparatus includes:
a processing module, configured to generate a second key pair, in which the second key pair includes a second public key and a second private key;
a transceiver module, configured to send the second public key to a server; and
the transceiver module, further configured to receive a second public key certificate and a third public key certificate, in which the second public key certificate includes a fourth public key in a fourth key pair, the fourth key pair includes the fourth public key and a fourth private key, and the fourth key pair is generated by the server, the third public key certificate includes a first public key in a first key pair, and the first key pair is generated by a first device, and the first device is a device to be communicated with a second device, and the third public key certificate is obtained after being signed with the fourth private key.

According to an eighth aspect, embodiments of the disclosure provide a communication apparatus. The apparatus includes:
a transceiver module, configured to receive a key request message sent by a server;
a processing module, configured to generate a sixth key pair, in which the sixth key pair includes a sixth public key and a sixth private key;
the transceiver module, further configured to send the sixth public key to the server; and
the transceiver module, further configured to receive a first public key certificate sent by the server, in which the first public key certificate includes a second public key in a second key pair, the second key pair is generated by a second device and includes the second public key and a second private key, and the second device is a device to be communicated with a third device.

According to a ninth aspect, embodiments of the disclosure provide a communication device. The communication device includes a processor. The processor implements the method described in any one of the first aspect to the fourth aspect by calling a computer program stored in a memory.

According to a tenth aspect, embodiments of the disclosure provide a communication device. The communication device includes a processor and a memory. The memory stores a computer program which, when executed by the processor, causes the communication device to implement the method described in any one of the first aspect to the fourth aspect.

According to an eleventh aspect, embodiments of the disclosure provide a communication device. The communication device includes: a processor and an interface circuit. The interface circuit is configured to receive code instructions and transmit the code instructions to the processor, and the processor is configured to run the code instructions to cause the device to implement the method described in any one of the first aspect to the fourth aspect.

According to a twelfth aspect, embodiments of the disclosure provide a communication system. The system includes the communication apparatuses described in the fifth aspect, the sixth aspect, the seventh aspect and the eighth aspect. Or, the system includes the communication device described in the ninth aspect. Or, the system includes the communication device described in the tenth aspect. Or, the system includes the communication device described in the eleventh aspect.

According to a thirteenth aspect, embodiments of the disclosure provide a computer-readable storage medium. The computer-readable storage medium is configured to store instructions used by the above network device. When the instructions are executed, the terminal is caused to implement the method described in any one of the first aspect to the fourth aspect.

According to a fourteenth aspect, the disclosure provides a computer program product including a computer program which, when executed by a computer, causes a computer to implement the method described in any one of the first aspect to the fourth aspect.

According to a fifteenth aspect, the disclosure provides a chip system. The chip system includes at least one processor and an interface for supporting the network device in implementing functions involved in any one of the first aspect to the fourth aspect, e.g., determining or processing at least one of data or information involved in the method described above. In a possible design, the chip system further includes a memory. The memory is configured to store necessary computer programs and data for source secondary nodes. The chip system may consist of chips or may include chips and other discrete components.

According to a sixteenth aspect, the disclosure provides a computer program which, when executed by a computer, causes a computer to implement the method described in any one of the first aspect to the fourth aspect.

### BRIEF DESCRIPTION OF THE DRAWINGS

The above and/or additional aspects and advantages of the disclosure will become apparent and readily understood from the following descriptions of the embodiments in combination with the accompanying drawings, in which:
FIG. 1a is a schematic structural diagram of a communication system provided by an embodiment of the disclosure.
FIG. 1b is a schematic structural diagram of a communication system provided by an embodiment of the disclosure.
FIG. 2 is a flowchart of a key exchange method provided by an embodiment of the disclosure.
FIG. 3 is a flowchart of a key exchange method provided by an embodiment of the disclosure.
FIG. 4 is a flowchart of a key exchange method provided by an embodiment of the disclosure.
FIG. 5 is a flowchart of a key exchange method provided by an embodiment of the disclosure.
FIG. 6 is a flowchart of a key exchange method provided by an embodiment of the disclosure.
FIG. 7 is a flowchart of a key exchange method provided by an embodiment of the disclosure.
FIG. 8 is a flowchart of a key exchange method provided by an embodiment of the disclosure.
FIG. 9 is a flowchart illustrating an interaction of a key exchange method provided by an embodiment of the disclosure.
FIG. 10 is a flowchart illustrating an interaction of a key exchange method provided by an embodiment of the disclosure.
FIG. 11 is a flowchart illustrating an interaction of a key exchange method provided by an embodiment of the disclosure.
FIG. 12 is a flowchart illustrating an interaction of a key exchange method provided by an embodiment of the disclosure.
FIG. 13 is a flowchart illustrating an interaction of a key exchange method provided by an embodiment of the disclosure.
FIG. 14 is a flowchart illustrating an interaction of a key exchange method provided by an embodiment of the disclosure.
FIG. 15 is a flowchart illustrating an interaction of a key exchange method provided by an embodiment of the disclosure.
FIG. 16 is a flowchart illustrating an interaction of a key exchange method provided by an embodiment of the disclosure.
FIG. 17 is a flowchart illustrating an interaction of a key exchange method provided by an embodiment of the disclosure.
FIG. 18 is a flowchart illustrating an interaction of a key exchange method provided by an embodiment of the disclosure.
FIG. 19 is a schematic diagram illustrating connections between respective devices provided by an embodiment of the disclosure.
FIG. 20 is a schematic diagram illustrating an interaction procedure corresponding to a method for establishing a secure channel between a vehicle and a device provided by an embodiment of the disclosure.
FIG. 21 is a schematic diagram illustrating an interaction procedure corresponding to a method for sharing a secure channel provided by an embodiment of the disclosure.
FIG. 22 is a schematic structural diagram of a communication apparatus provided by an embodiment of the disclosure.
FIG. 23 is a schematic structural diagram of a communication apparatus provided by an embodiment of the disclosure.
FIG. 24 is a schematic structural diagram of a communication apparatus provided by an embodiment of the disclosure.
FIG. 25 is a schematic structural diagram of a communication apparatus provided by an embodiment of the disclosure.
FIG. 26 is a block diagram of a communication device provided by an embodiment of the disclosure.
FIG. 27 is a schematic structural diagram of a chip provided by an embodiment of the disclosure.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of example embodiments do not represent all implementations consistent with the embodiments of the disclosure. Instead, they are merely examples of apparatuses and methods consistent with aspects related to the embodiments of the disclosure as recited in the attached claims.

The terms used in the embodiments of the disclosure are only for the purpose of describing specific embodiments, and are not intended to limit the embodiments of the disclosure. The singular forms of "a" and "the" used in the embodiments of the disclosure and the attached claims are also intended to include plural forms, unless the context clearly indicates other meanings. It should also be understood that the term "and/or" as used herein refers to and includes any or all possible combinations of one or more associated listed items.

It is understandable that the terms "first", "second" and "third", etc. used in the embodiments of the disclosure are used to describe various information rather than limiting the information. These terms are only used to distinguish the same type of information from each other. For example, without departing from the scope of the embodiments of the disclosure, the first information may be referred to as the second information, and similarly, the second information may be referred to as the first information. Depending on the context, the term "if" as used herein may be interpreted as "when", "while" or "in response to determining".

The embodiments of the disclosure are described in detail below, examples of which are illustrated in the accompanying drawings, in which the same or similar reference numerals refer to the same or similar elements throughout. The embodiments described below with reference to the accompanying drawings are exemplary, and they are intended to explain the disclosure and should not be construed as limiting the disclosure.

In order to facilitate understanding, the terms involved in the disclosure are introduced first.

### 1. Symmetric key

Symmetric key encryption, also referred to as private key encryption, requires both a transmitter and a receiver to use a same key to encrypt and decrypt plaintext. Symmetric encryption requires a robust encryption algorithm. The algorithm shall at least satisfy the following condition: even if analysts know the algorithm and have access to some or all of ciphertexts, they cannot decrypt the ciphertexts or derive the key. The transmitter and the receiver shall acquire copies of an encryption key through secure means, and shall ensure the security of the key.

### 2. Asymmetric key

Asymmetric key, also referred to as public key, i.e., each individual possesses a pair of unique corresponding keys: a public key and a private key. The public key is openly shared, while the private key is kept confidential. Encryption performed with one key may only be decrypted using the other key. Since the public key is known to the public, anyone wishing to send information to a holder of the private key may obtain the public key. After encrypting the information with the public key and sending the encrypted information to the holder, even if the encrypted information is intercepted or stolen, attackers without the private key cannot access the encrypted information, thus ensuring secure transmission of the information. In addition, encrypting the information with the private key and then decrypting the information with the public key may complete identity (ID) authentication of the holder of the private key, as only the public key can unlock information encrypted with the private key.

In related arts, communication keys configured for respective devices requiring communication may be the symmetric keys or the asymmetric keys.

In some embodiments, taking a vehicle and a terminal as examples of the devices requiring communication, in a method for configuring a symmetric key for the vehicle and the terminal, a server sends the same communication key to both the vehicle and the terminal, or the server stores a static key, acquires feature information corresponding to different terminals and calculates a communication key for encrypted communication between each of the terminals and the vehicle based on the feature information of the each of the terminals and the static key, and then sends the communication key to the each of the terminals and the vehicle. Upon receiving the communication key sent by the server, both the vehicle and the terminal may encrypt information to be transmitted with the key during subsequent communication, thus ensuring secure communication.

In some embodiments, when the communication keys configured for the respective devices requiring communication are the asymmetric keys, each device shall generate its own key pair, which includes a public key and a private key. Before communication, devices shall exchange their respective public keys to complete security verification between devices and establish a secure channel. In an example, after establishing the secure channel, in order to reduce communication complexity, devices may communicate securely without relying on the asymmetric keys. Instead, they may generate a temporary symmetric key through key negotiation (e.g., using a Diffie-Hellman algorithm), and then use this temporary symmetric key to complete secure communication.

However, in the related arts, for the foregoing solution of "configuring the symmetric keys for respective devices requiring communication", since devices under a symmetric key system all use the same communication key, if this communication key is compromised (e.g., if the server is breached), it may affect the communication security among all devices, and results in significant risk exposure for the solution of "configuring the symmetric keys for respective devices requiring communication".

Regarding the solution of "configuring asymmetric keys for respective devices requiring mutual communication", since public keys shall be exchanged among the respective devices, a local connection (such as a Bluetooth connection, a near field communication (NFC) connection, etc.) usually needs to be established between the devices. However, the local connection is often unstable. For example, the NFC connection has lower compatibility, and the Bluetooth connection is susceptible to environmental factors. Thus, the unstable local connection may affect user experience negatively. Since the local connection is usually established at close proximity and cannot be established over a long distance, the above solution of "configuring asymmetric keys" cannot support public key exchange between the devices over the long distance, and thus its application scenario is very limited. Moreover, in the above solution of "configuring asymmetric keys", the devices that have generated the asymmetric keys cannot authorize other devices to participate in secure communication, resulting in limited flexibility.

Therefore, the disclosure provides a key exchange method.

In order to better understand the key exchange method provided by an embodiment of the disclosure, a communication system to which the embodiments of the disclosure are applied is described below.

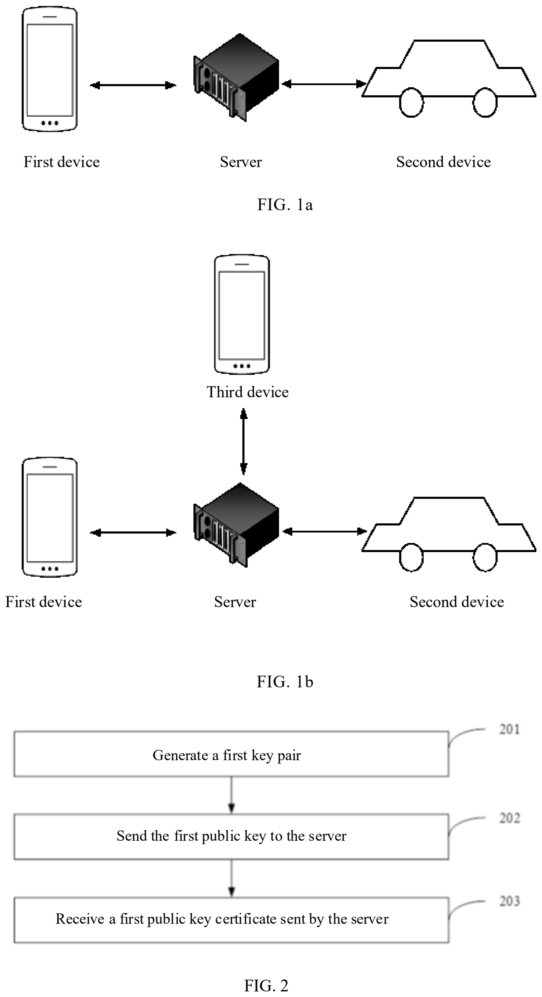

FIG. 1a is a schematic structural diagram of a communication system provided by an embodiment of the disclosure. The communication system includes, but is not limited to, at least one first device, at least one server, and at least one second device. The first device may be a terminal, and the second device may be a device requiring communication with the first device. In an embodiment of the disclosure, the second device may be a non-network side device. The numbers and forms of devices shown in FIG. 1a are provided merely as examples and do not constitute limitations on the embodiments of the disclosure, and one or more first devices, one or more servers, and one or more second devices may be included in practical applications. By way of example, the communication system shown in FIG. 1a includes one first device (e.g., a terminal), one server and one second device (e.g., a vehicle).

FIG. 1b is a schematic structural diagram of another communication system provided by an embodiment of the disclosure. The communication system includes, but is not limited to, at least one first device, at least one server, at least one second device and at least one third device. The first device may be a terminal, and the second device may be a device requiring communication with the first device. In an embodiment of the disclosure, the second device may be a non-network side device, and the third device may be a device that requires authorization from the first device to communicate with the second device. Moreover, the third device may be a terminal. The numbers and forms of devices shown in FIG. 1b are provided merely as examples and do not constitute limitations on the embodiments of the disclosure, and one or more first devices, one or more servers, one or more second devices and one or more third devices may be included in practical applications. By way of example, the communication system shown in FIG. 1b includes one first device (e.g., a terminal), one server, one second device (e.g., a vehicle) and one third device (e.g., another terminal).

It is noted that the technical solutions of the embodiments of the disclosure can be applied to various communication systems, such as, a long term evolution (LTE) system, a 5th generation (5G) mobile communication system, a 5G new radio (NR) system, or other future new mobile communication systems.

The terminal in the embodiment of the disclosure may be an entity on a user side for receiving or transmitting signals, such as cellular phone. The terminal may also be referred to as terminal, user equipment (UE), mobile station (MS), mobile terminal (MT), and the like. The terminal may be a car with communication functions, a smart car, a mobile phone, a wearable device, a Pad, a computer with wireless transceiver functions, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. The specific technology and device form adopted by the terminal are not limited in the embodiments of the disclosure.

It is understandable that the communication system described in the embodiment of the disclosure is introduced first, so that the technical solution in the embodiments of the disclosure can be described more clearly, and the description does not constitute a limitation on the technical solution provided by the embodiments of the disclosure. Those skilled in the art understand that as system architectures evolve and new business scenarios emerge, the technical solution provided by the embodiments of the disclosure is also applicable to similar technical problems.

In addition, in order to facilitate understanding of the embodiments of the disclosure, the following points need to be made.

Firstly, in the disclosure, without conflict, each step in any implementation or embodiment can be implemented as an independent embodiment, and steps can be arbitrarily combined. For example, a scheme obtained after removing certain steps from an implementation or embodiment can be implemented as an independent embodiment, steps in the implementation or embodiment are interchangeable, and optional methods or examples in the implementation or embodiment can be combined arbitrarily. Moreover, different implementations or embodiments can also be combined arbitrarily. For example, some or all the steps from different implementations or embodiments can be combined freely, and an implementation or embodiment can be arbitrarily combined with optional methods or examples from other implementations or embodiments.

Secondly, regarding the expressions "A or B", "A and/or B", "at least one of A or B", "A in one case and B in another case", and "in response to one case A and in response to another case B" in the disclosure, depending on the circumstances, they may describe at least one of the following scenarios: executing A independently of B, i.e., A in some embodiments; executing B independently of A, i.e., B in some embodiments; selectively executing A or B, i.e., executing either A or B in some embodiments; and executing A and B, i.e., executing both A and B in some embodiments.

Thirdly, each element, row, or column in the tables described herein can be implemented as an independent embodiment. Any combination of the element, the row and/or the column can also be implemented as an independent embodiment.

Fourthly, in some implementations or embodiments, the terms "including A", "comprising A", "for indicating A" and "carrying A" can be interpreted as either directly carrying A or indirectly indicating A.

Fifthly, in some implementations or embodiments, the terms "in response to...", "in a case of...", "when...", "while", "upon..." and "if..." can be used interchangeably.

FIG. 2 is a flowchart of a key exchange method provided by an embodiment of the disclosure. The method is performed by a first device. As illustrated in FIG. 2, the method includes the following steps.

At step 201, a first key pair is generated.

In some embodiments, the first key pair may include a first public key and a first private key.

In some embodiments, the method of generating the first key pair by the first device may include: in response to determining, by a first application (APP) in the first device, e.g., a vehicle APP, that the first key pair is to be generated, invoking a first module in the first device to generate the first key pair.

In some embodiments, the first APP determines that the first key pair needs to be generated presently when detecting a first preset signal. In an embodiment of the disclosure, the first preset signal may be triggered when a user performs a first preset operation on the first APP. In an embodiment of the disclosure, the first preset operation may be, for example, an operation of clicking "key pair generation (or enabling)" on the first APP.

In some embodiments, the first module may be, for example, a digital key framework (DKF) module/interface. In an embodiment of the disclosure, after receiving invoking from the first APP, the first module may generate the first key pair using a secure hardware of the first device (such as a secure element (SE)) or a trusted execution environment (TEE)), stores the first private key of the first key pair in the secure hardware, and returns the first public key of the first key pair to the first APP. In an embodiment of the disclosure, the first module may directly return the first public key to the first APP, or the first module may send a second certificate signing request (CSR) including the first public key to the first APP, so that the first APP may obtain the first public key by parsing the second CSR.

It should be noted that in some embodiments, before performing the key exchange method of the disclosure, the server and the first device requires to complete at least one of the following verifications:
the server has completed an ID authentication of a user of the first device;
the first APP has established a secure channel with the server; or
the first module has completed legitimacy verification of the first APP.

At step 202, the first public key is sent to the server.

In some embodiments, the first APP on the first device may send the first public key to the server.

In some embodiments, the first device may directly send the first public key to the server, or may send a first CSR including the first public key to the server.

In some embodiments, the first device sends the first public key to the server, so that the server may send the first public key to a second device when needed. In an embodiment of the disclosure, the second device may be a device to be communicated with the first device. The second device may establish encrypted communication with the first device based on the first public key, thus ensuring communication security. Details regarding "how the server sends the first public key to the second device" may be described in the following embodiments.

At step 203, a first public key certificate sent by the server is received.

In some embodiments, the first public key certificate includes a second public key in a second key pair. In an embodiment of the disclosure, the second key pair is generated by the second device, and the second key pair includes the second public key and a second private key. In an embodiment of the disclosure, after the second key pair is generated, the second device sends the second public key to the server. For example, the second device may directly send the second public key to the server, or the second device may send a third CSR including the second public key to the server. Upon receiving the second public key sent by the second device, the server may generate the aforementioned first public key certificate based on the second public key. In some embodiments, the first public key certificate may be obtained after being signed by the server with a third private key in a third key pair. In an embodiment of the disclosure, the third key pair is pre-generated by the server, the third key pair includes a third public key and the third private key. In some embodiments, the method of generating the first public key certificate by the server includes: obtaining a first signature after signing the second public key with the third private key by the server; generating the first public key certificate based on the first signature and the second public key; and, after the server generates the first public key certificate, sending the first public key certificate to the first device .

In some embodiments, after the first device receives the first public key certificate sent by the server, since the first public key certificate includes the second public key generated by the second device, the first device may obtain the second public key corresponding to the second device based on the first public key certificate. It can be known from the above steps 202-203 that in an embodiment of the disclosure, the first device sends the first public key corresponding to the first device to the second device via the server, and then receives the second public key corresponding to the second device via the server. In this way, the first device and the second device have implemented exchange of public keys between both via the server. When the first device needs to communicate with the second device, the first device and the second device may establish encrypted communication based on their own private keys and each other's public keys, thus ensuring communication security.

In some embodiments, in an asymmetric key system established by the method of the disclosure, each device generates its own key pair, realizing a mechanism of "one device, one key". Compared with the solution of "using the same key to realize secure communication among all devices in a symmetric key system", the method of the disclosure has higher security. Moreover, in the method of the disclosure, the public keys are exchanged through the server without exchanging private keys, so that even if the server is breached, it may cause only the public keys to be compromised, not the private keys, which may not affect communication security, and thus the communication security is further ensured.

In some embodiments, since the first device and the second device exchange their own public keys via the server, even if the first device and the second device are relatively far from each other, the exchange of the public keys between the first device and the second device may be implemented successfully. This eliminates the limitation present in the related arts, where the application of asymmetric keys is limited to devices in close proximity, and thus the key exchange method in the disclosure exhibits lower application limitations and higher flexibility. Moreover, the first device, the second device and the server have high connection stability, and a technical issue such as "affecting user experience negatively due to poor connection stability" may be avoided. Since the first device and the second device exchange their public keys via the server rather than directly between themselves, even if the first device and the second device belong to different brands or platforms, public key exchange between cross-platform or cross-brand devices can be successfully implemented via the server, thus further reducing the limitations of the key exchange method, broadening the scope of applicability, without a need for connection between different device manufacturers, and reducing operation complexity.

To sum up, in the key exchange method provided by the embodiment of the disclosure, the first device and the second device may exchange their public keys through the server, so that the first device and the second device establish encrypted communication based on their own private keys and each other's public keys, thus ensuring communication security. The method in the disclosure may realize the mechanism of "one device, one key" and exchange the public keys via the server without exchanging the private keys, thus further ensuring the communication security. Moreover, the method in the disclosure may realize public key exchange between the first device and the second device over a long distance, with few applicability limitations, high flexibility and high stability, thereby improving user experience. The method in the disclosure may also enable public key exchange between cross-platform or cross-brand devices, thus broadening the scope of applicability, without a need for connection between different device manufacturers, and reducing operation complexity.

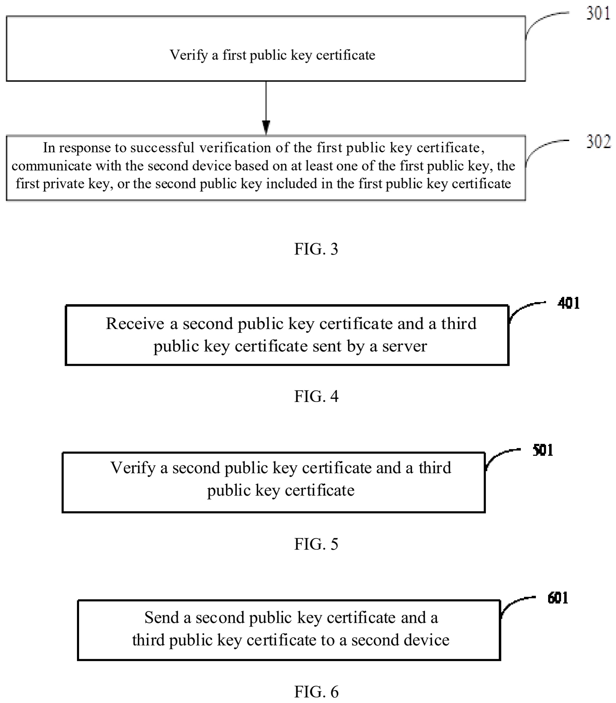

FIG. 3 is a flowchart of a key exchange method provided by an embodiment of the disclosure. The method is performed by a first device. As illustrated in FIG. 3, the method includes the following steps.

At step 301, a first public key certificate is verified.

In the embodiment of the disclosure, as described in step 203 above, the first public key certificate includes the first signature and the second public key, and the first signature is obtained by signing the second public key with the third private key. In some embodiments, the first device may verify the first public key certificate based on the third public key. In an embodiment of the disclosure, the third public key is preconfigured in both the first device and the second device. On the basis of this, in some embodiments, the method of verifying, by the first device, the first public key certificate based on the third public key includes: when/after the first device receives the first public key certificate sent by the server, obtaining, by the first device, a decrypted result by decrypting the first signature in the first public key certificate based on the preconfigured third public key; checking whether the decrypted result and the second public key in the first public key certificate are consistent; if consistent, determining that the first public key certificate is generated by the server, which indicates that a source of the first public key certificate is trustworthy, and represents that the first public key certificate (such as the second public key in the first public key certificate) is trustworthy, and determining that verification of the first public key certificate is successful; or if inconsistent, determining that the first public key certificate is not generated by the server, which indicates that the source of the first public key certificate is untrustworthy, and represents that the first public key certificate (such as the second public key in the first public key certificate) is untrustworthy, and determining that the verification of the first public key certificate fails.

At step 302, in response to successful verification of the first public key certificate, the first device communicates with the second device based on at least one of the first public key, the first private key, or the second public key included in the first public key certificate.

In an embodiment of the disclosure, the method of communicating, by the first device, with the second device based on the at least one of the first public key, the first private key, or the second public key included in the first public key certificate includes: when the first device is to be sent information to the second device, signing, by the first device, information to be sent with the first private key generated by the first device itself, encrypting signed information by using the second public key generated by the second device, and sending encrypted information to the second device. After receiving the information sent by the first device, the second device may sign and verify the received information using the first public key generated by the first device which is obtained from the server, and then decrypt the information using the second private key generated by the second device itself, thus realizing key-based secure communication between the first device and the second device.

It should be noted that in other embodiments, after the verification of the first public key certificate is successful, the first device may not communicate with the second device based on at least one of the first public key, the first private key, or the second public key included in the first public key certificate. Instead, the first device may generate a temporary symmetric key through key negotiation with the second device (e.g., using a Diffie-Hellman algorithm), and then communicate with the second device based on the temporary symmetric key, which may reduce complexity of encrypted communication.

To sum up, in the key exchange method provided by the embodiment of the disclosure, after receiving the first public key certificate, the first device first verifies the first public key certificate. After the verification of the first public key certificate is successful, the first device communicates with the second device based on at least one of the first public key, the first private key, or the second public key included in the first public key certificate, thus ensuring the communication security between the first device and the second device.

FIG. 4 is a flowchart of a key exchange method provided by an embodiment of the disclosure. The method is performed by a first device. As illustrated in FIG. 4, the method includes the following step.

At step 401, a second public key certificate and a third public key certificate sent by a server is received.

In some embodiments, the second public key certificate includes a fourth public key in a fourth key pair. The fourth key pair includes the fourth public key and a fourth private key and is generated by the server. The second public key certificate is obtained after being signed with a third private key in a third key pair, and the third public key certificate includes a first public key and is obtained after being signed with the fourth private key.

In some embodiments, both the second public key certificate and the third public key certificate are generated by the server. The primary reason why the server generates the second public key certificate and the third public key certificate is that: the server requires to transfer the first public key of the first device to a second device using the second public key certificate and the third public key certificate. In detail, as described above, the third public key certificate includes the first public key generated by the first device and is obtained by being signed with the fourth private key. Therefore, the third public key certificate is used to transfer the first public key of the first device and requires to be verified by the fourth public key. The second public key certificate includes the fourth public key and is obtained by being signed with the third private key, and thus the second public key certificate is used to transfer the fourth public key and requires to be verified by the third public key. On the basis of this, a certificate chain is formed based on the second public key certificate and the third public key certificate to transfer the first public key of the first device. In the certificate chain formed by the second public key certificate and the third public key certificate, the second public key certificate is verified using the third public key to obtain the fourth public key, and then the third public key certificate is verified using the fourth public key to obtain the first public key. On the basis of this, the server generates the second public key certificate and the third public key certificate, and sends the second public key certificate and the third public key certificate to the second device to transfer the first public key of the first device to the second device.

In an embodiment of the disclosure, it should be noted that after generating the second public key certificate and the third public key certificate, the server shall send the second public key certificate and the third public key certificate to the second device to inform the second device of the first public key of the first device, to realize public key exchange between the first device and the second device. However, in some embodiments, there may be a situation where the second device is offline, e.g., the second device is not connected to the server and the server cannot contact the second device, the server may send the second public key certificate and the third public key certificate to the first device. Therefore, when the first device communicates with the second device for the first time, the first device may first send the second public key certificate and the third public key certificate to the second device, so that the second device can obtain the first public key of the first device based on the second public key certificate and the third public key certificate and then establish secure communication.

It can be seen that in the disclosure, the first public key is transferred by constructing a certificate chain. Since the second public key certificate in the certificate chain is obtained after being signed with the third private key in the third key pair, and the third public key certificate in the certificate chain is obtained after being signed with the fourth private key in the fourth key pair, it is required to know the third private key and the fourth private key simultaneously in order to construct the second public key certificate and the third public key certificate. Therefore, a risk exposure occurs only when both the third private key and the fourth private key are compromised, and when one of the third private key and the fourth private key is compromised, the risk exposure may not occur. Thus, the method of the disclosure exhibits a higher security and stability.

In some embodiments, the method of generating, by the server, the second public key certificate may include: obtaining, by the server, a second signature by signing the fourth public key in the fourth key pair with the third private key, and generating the second public key certificate using the second signature and the fourth public key. In an embodiment of the disclosure, the fourth key pair may be pre-generated by the server. In other embodiments, the method of generating, by the server, the third public key certificate may include: after receiving the first public key sent by the first device, obtaining, by the server, a third signature by signing the first public key with the fourth private key in the fourth key pair, and generating the third public key certificate by using the third signature and the first public key.

To sum up, in the key exchange method provided by the embodiment of the disclosure, the first device may receive the second public key certificate and the third public key certificate sent by the server. The second public key certificate and the third public key certificate are used to transfer the first public key of the first device. Therefore, the first device may send the second public key certificate and the third public key certificate received to the second device, to transfer the first public key of the first device to the second device, thus realizing public key exchange between the first device and the second device. On the basis of this, when the first device communicates with the second device, the first device and the second device may establish encrypted communication based on their own private keys and each other's public keys, thus ensuring communication security.

FIG. 5 is a flowchart of a key exchange method provided by an embodiment of the disclosure. The method is performed by a first device. As illustrated in FIG. 5, the method includes the following step.

At step 501, a second public key certificate and a third public key certificate are verified.

In some embodiments, the method of verifying, by the first device, the second public key certificate and the third public key certificate may include the following steps.

Step a: a fourth public key is obtained by verifying the second public key certificate based on a third public key.

In an embodiment of the disclosure, the method of verifying the second public key certificate in the aforementioned step a may be described below.

As described in step 401 above, the second public key certificate includes the second signature and the fourth public key, and the second signature is obtained by signing the fourth public key with the third private key. Thus, in some embodiments, the first device may verify the first public key certificate based on the third public key. In an embodiment of the disclosure, the third public key may be preconfigured in both the first device and the second device. In an embodiment of the disclosure, the method of verifying, by the first device, the second public key certificate based on the third public key may include: when receiving the second public key certificate sent by the server, obtaining, by the first device, a decrypted result by decrypting the second signature in the second public key certificate based on the preconfigured third public key; checking whether the decryption decrypted and the fourth public key in the second public key certificate are consistent; if consistent, determining that the second public key certificate is generated by the server , which indicates that a source of the second public key certificate is trustworthy, and represents that the second public key certificate (such as the fourth public key in the second public key certificate) is trustworthy, and determining that verification of the second public key certificate is successful; or if inconsistent, determining that the second public key certificate is not generated by the server, which indicates that the source of the second public key certificate untrustworthy, and represents that the second public key certificate (such as the fourth public key in the second public key certificate) is untrustworthy, and determining that the verification of the second public key certificate fails.

Step b: the third public key certificate is verified based on the fourth public key.

In an embodiment of the disclosure, the method of verifying the third public key certificate in the aforementioned step b may be described below.

As described in step 401 above, the third public key certificate includes the third signature and the first public key, and the third signature is obtained by signing the first public key with the fourth private key. Thus, in some embodiments, the first device may verify the third public key certificate based on the fourth public key. In an embodiment of the disclosure, the method of verifying, by the first device, the third public key certificate based on the fourth public key may include: obtaining a decrypted result by decrypting the third signature in the third public key certificate based on the fourth public key; checking whether the decrypted result and the first public key in the third public key certificate are consistent; if consistent, determining that the third public key certificate is generated by the server, which indicates that a source of the third public key certificate is trustworthy, and represents that the third public key certificate (such as the first public key in the third public key certificate) is trustworthy, and determining that verification of the third public key certificate is successful; or if inconsistent, determining that the third public key certificate is not generated by the server and, which indicates that the source of the third public key certificate is untrustworthy, and represents that the third public key certificate (such as the first public key in the third public key certificate) is untrustworthy, and determining that the verification of the third public key certificate fails.

To sum up, in the key exchange method provided by the embodiment of the disclosure, after receiving the second public key certificate and the third public key certificate sent by the server, the first device may verify the second public key certificate and the third public key certificate, thereby ensuring security and stability of certificate transmission.

FIG. 6 is a flowchart of a key exchange method provided by an embodiment of the disclosure. The method is performed by a first device. As illustrated in FIG. 6, the method includes the following step.

At step 601, a second public key certificate and a third public key certificate are sent to a second device.

In some embodiments, the first device sends the second public key certificate and the third public key certificate to the second device after verification of the second public key certificate and the third public key certificate is successful.

In some embodiments, the first device sends the second public key certificate and the third public key certificate to the second device, so that the second device may obtain the first public key of the first device by verifying the second public key certificate and the third public key certificate, thus realizing public key exchange between the first device and the second device. The first device and the second device may establish secure communication based on their own private keys and each other's public keys. For detailed contents on this section, reference may be made to the introduction of the above embodiment in FIG. 4.

To sum up, in the key exchange method provided by the embodiment of the disclosure, the first device sends the received second public key certificate and the third public key certificate to the second device to inform the second device of its first public key, to realize public key exchange between the first device and the second device. When the first device communicates with the second device, the first device and the second device may establish encrypted communication based on their own private keys and each other's public keys, thus ensuring communication security.

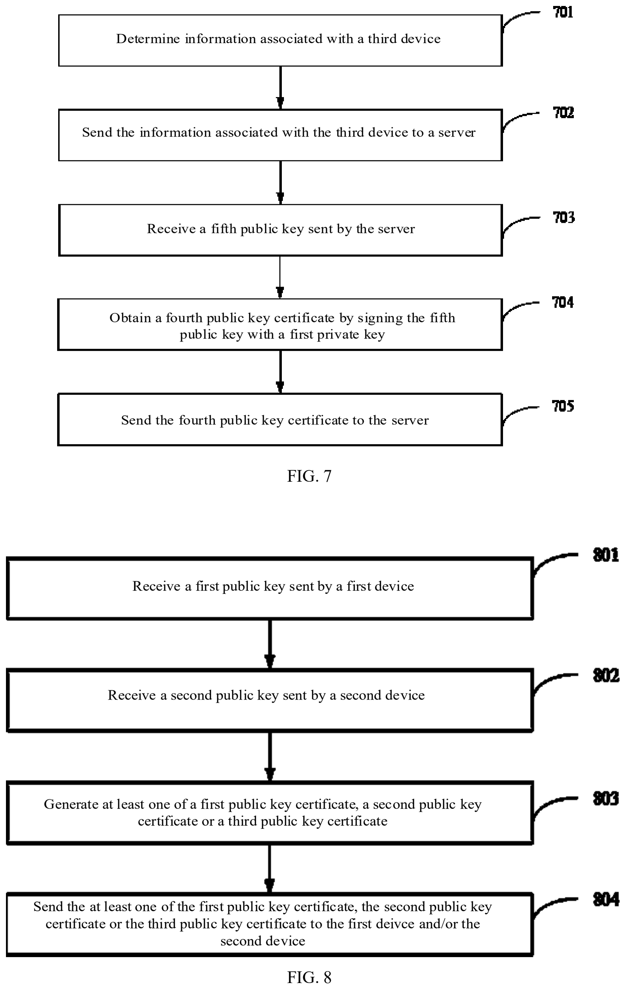

FIG. 7 is a flowchart of a key exchange method provided by an embodiment of the disclosure. The method is performed by a first device. As illustrated in FIG. 7, the method includes the following steps.

At step 701, information associated with a third device is determined.

In some embodiments, the third device is a device authorized by the first device to communicate with a second device, such as a terminal. For example, the third device may be a terminal belonging to a friend of a user of the first device.

In some embodiments, the information associated with the third device may include at least one of:
identification information for indicating the third device;
a communication validity duration between the third device and the second device. In an embodiment of the disclosure, the third device may communicate with the second device within the communication validity duration; or
a control permission of the third device over the second device. In an embodiment of the disclosure, if the second device is a vehicle, the control permission may include: starting the vehicle, playing audio inside the vehicle, etc.

In some embodiments, the method of determining, by the first device, the information associated with the third device may include: determining, by the first device, the information associated with the third device by detecting the third device selected by the user on the first APP, the communication validity duration and the control permission set by the user.

At step 702, the information associated with the third device is sent to a server.

In some embodiments, when the first device sends the information associated with the third device to the server, it indicates that the first device authorizes the third device to communicate with the second device. At this time, the server can further perform subsequent operations to facilitate public key exchange between the third device and the second device, so that they establish secure communication based on the public keys and their own private keys. This part will be introduced in detail in subsequent embodiments.

At step 703, a fifth public key sent by the server is received.

In some embodiments, the fifth public key belongs to a fifth key pair, and the fifth key pair includes the fifth public key and a fifth private key and is generated by the server.

At step 704, a fourth public key certificate is obtained by signing the fifth public key with a first private key.

In some embodiments, the method of generating, by the first device, the fourth public key certificate may include: obtaining a fourth signature by signing the fifth public key with the first private key, and generating the fourth public key certificate based on the fourth signature and the fifth public key.

At step 705, the fourth public key certificate is sent to the server.

In some embodiments, the primary reason why the first device generates the fourth public key certificate and sends the fourth public key certificate to the server is to use the fourth public key certificate as an intermediate certificate for transferring a sixth public key of the third device to the second device. In an embodiment of the disclosure, the sixth public key belongs to a sixth key pair, and the sixth key pair includes the sixth public key and a sixth private key and is generated by the third device.

The following provides a detailed explanation of the aforementioned method of "using the fourth public key certificate as the intermediate certificate to transfer the sixth public key of the third device to the second device".

In an embodiment of the disclosure, when the server determines that the first device has authorized the third device to communicate with the second device, the server sends a key request message to the third device to request the sixth public key of the third device. Upon receiving the sixth public key of the third device, the server selects a certificate for transmitting the sixth public key of the third device and a certificate for transmitting a second public key of the second device. In an embodiment of the disclosure, the "certificate for transmitting the second public key of the second device" refers to the first public key certificate described above, and for details about this part, reference may be made to the above embodiments. The "certificate for transmitting the sixth public key of the third device" includes the fourth public key certificate and a fifth public key certificate. In an embodiment of the disclosure, the fourth public key certificate is generated by the first device, and for a specific generation method, reference may be made to description of in step 704 above. The fifth public key certificate is generated by the server and includes the sixth public key. The fifth public key certificate is obtained after being signed with the fifth private key. It follows that the fifth public key certificate is used to transmit the sixth public key of the third device, and the fifth public key certificate is required to be verified by the fifth public key, and the fourth public key certificate is used to transmit the fifth public key, the fourth public key certificate is required to be verified by the third public key. On the basis of this, the fourth public key certificate and the fifth public key certificate form a certificate chain for transmitting the sixth public key of the third device. In the certificate chain formed by the fourth public key certificate and the fifth public key certificate, the fourth public key certificate is verified using the first public key to obtain the fifth public key, and the fifth public key certificate is verified using the fifth public key to obtain the sixth public key of the third device.

In an embodiment of the disclosure, after generating the certificate for transmitting the sixth public key of the third device (i.e., the aforementioned fourth public key certificate and the fifth public key certificate) and the certificate for transmitting the second public key of the second device (i.e., the aforementioned first public key certificate), the server may send the fourth public key certificate and the fifth public key certificate to the second device and send the first public key certificate to the third device, to realize public key exchange between the second device and the third device. This allows the second device and the third device to establish secure communication based on their own private keys and each other's public keys.

As can be seen from the above, in the disclosure, a certificate chain is constructed to transmit the sixth public key. The fourth public key certificate in the certificate chain is obtained after being signed with the first private key in a first key pair, and the fifth public key certificate in the certificate chain is obtained after being signed with the fifth private key in the fifth key pair. Therefore, it is required to know the first private key and the fifth private key simultaneously in order to construct the fourth public key certificate and the fifth public key certificate. Therefore, a risk exposure occurs only when both the first private key and the fifth private key are compromised, and when one of the first private key and the fifth private key is compromised, the risk exposure may not occur. Thus, the method of the disclosure exhibits higher security and stability.

To sum up, in the key exchange method provided by the embodiment of the disclosure, the first device authorizes the third device to communicate with the second device by sending the information associated with the third device to the server. That is, the disclosure provides a secure channel sharing method for devices that have already established a secure channel to share that channel with other devices that have not yet established the secure channel, thereby enhancing the flexibility of secure communication. Moreover, in the method of the disclosure, the first device may generate the fourth public key certificate, and the server generates the fifth public key certificate. The fourth public key certificate and the fifth public key certificate are sent to the second device to transfer the sixth public key of the third device to the second device, and the first public key certificate is sent to the third device to transfer the second public key of the second device to the third device, which may realize public key exchange between the third device and the second device, thereby ensuring secure communication between the third device and the second device.

FIG. 8 is a flowchart of a key exchange method provided by an embodiment of the disclosure. The method is performed by a server. As illustrated in FIG. 8, the method includes the following steps.

At step 801, a first public key sent by a first device is received.

In an embodiment of the disclosure, the first public key belongs to a first key pair, and the first key pair includes the first public key and a first private key and is generated by the first device.

At step 802, a second public key sent by a second device is received.

In an embodiment of the disclosure, the second public key belongs to a second key pair, and the second key pair includes the second public key and a second private key and is generated by the second device. The second device is a device to be communicated with the first device.

At step 803, at least one of a first public key certificate, a second public key certificate or a third public key certificate is generated.

In an embodiment of the disclosure, the first public key certificate includes the second public key in the second key pair.

In an embodiment of the disclosure, the second public key certificate includes a fourth public key in a fourth key pair. The fourth key pair includes the fourth public key and a fourth private key. The second public key certificate is obtained after being signed with a third private key in a third key pair.

In an embodiment of the disclosure, the third public key certificate includes the first public key, and the third public key certificate is obtained after being signed with the fourth private key.

In some embodiments, the server may generate the third key pair and the fourth key pair, generate the second public key certificate based on the third private key in the third key pair, and generate the third public key certificate based on the fourth private key in the fourth key pair.

For a specific method of the server generating the first public key certificate, the second public key certificate and the third public key certificate, reference may be made to description of the above embodiments.

At step 804, at least one of the first public key certificate, the second public key certificate or the third public key certificate is sent to the first device and/or the second device.

In some embodiments, in response to the server being able to communicate with the second device (i.e., the second device being online), the server sends the second public key certificate and the third public key certificate to the second device, and sends at least one of the first public key certificate, the second public key certificate or the third public key certificate to the first device, e.g., sending the first public key certificate to the first device, or sending the first public key certificate, the second public key certificate and the third public key certificate to the first device. Therefore, the second device may obtain the first public key of the first device by verifying the second public key certificate and the third public key certificate, while the first device may obtain the second public key of the second device by verifying the first public key certificate, which may realize public key exchange between the first device and the second device. This allows the first device and the second device to establish secure communication based on their own private keys and each other's public keys.

In other embodiments, in response to the server being unable to communicate with the second device (i.e., the second device being offline), the server may send the first public key certificate, the second public key certificate and the third public key certificate to the first device, and the first device may subsequently forward the second public key certificate and the third public key certificate to the second device, which may also realize the public key exchange between the first device and the second device. This allows the first device and the second device to establish secure communication based on their own private keys and each other's public keys.

For detailed descriptions of steps 801-804, reference may be made to description of the above embodiments.

To sum up, in the key exchange method provided by the embodiment of the disclosure, the first device and the second device may exchange their public keys through the server, so that the first device and the second device establish encrypted communication based on their own private keys and each other's public keys, thus ensuring communication security. The method in the disclosure may realize the mechanism of "one device, one key" and exchange the public keys via the server without exchanging the private keys, thus further ensuring the communication security. Moreover, the method in the disclosure may realize public key exchange between the first device and the second device over a long distance, with few applicability limitations, high flexibility and high stability, thereby improving user experience. The method in the disclosure may also enable public key exchange between cross-platform or cross-brand devices, thus broadening the scope of applicability, without a need for connection between different device manufacturers, and reducing operation complexity.

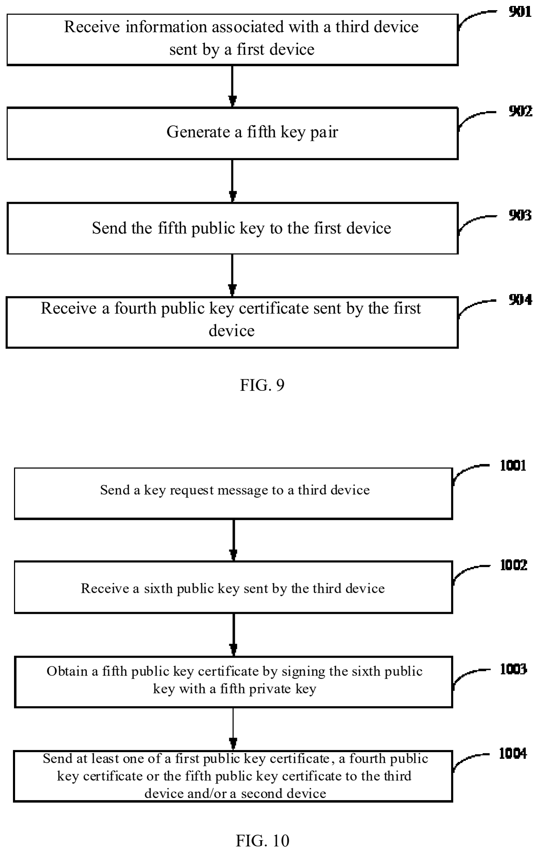

FIG. 9 is a flowchart of a key exchange method provided by an embodiment of the disclosure. The method is performed by a server. As illustrated in FIG. 9, the method includes the following steps.

At step 901, information associated with a third device sent by a first device is received.

In an embodiment of the disclosure, the third device is a device to be authorized by the first device to communicate with a second device.

At step 902, a fifth key pair is generated.

In an embodiment of the disclosure, the fifth key pair includes a fifth public key and a fifth private key.

At step 903, the fifth public key is sent to the first device.

At step 904, a fourth public key certificate sent by the first device is received.

In an embodiment of the disclosure, the fourth public key certificate includes the fifth public key and is obtained after being signed with a first private key in a first key pair.

For detailed descriptions of steps 901-904, reference may be made to description of the above embodiments.

To sum up, in the key exchange method provided by the embodiment of the disclosure, the first device authorizes the third device to communicate with the second device by sending the information associated with the third device to the server. That is, the disclosure provides a secure channel sharing method for devices that have already established a secure channel to share that channel with other devices that have not yet established the secure channel, thereby enhancing the flexibility of secure communication. Moreover, in the method of the disclosure, the first device may generate the fourth public key certificate, and the server generates the fifth public key certificate. The fourth public key certificate and the fifth public key certificate are sent to the second device to transfer the sixth public key of the third device to the second device, and the first public key certificate is sent to the third device to transfer the second public key of the second device to the third device, which may realize public key exchange between the third device and the second device, thereby ensuring secure communication between the third device and the second device.

FIG.10 is a flowchart of a key exchange method provided by an embodiment of the disclosure. The method is performed by a server. As illustrated in FIG. 10, the method includes the following steps.

At step 1001, a key request message is sent to a third device.

At step 1002, a sixth public key sent by the third device is received.

In an embodiment of the disclosure, the sixth public key belongs to a sixth key pair, which includes the sixth public key and a sixth private key and is generated by the third device.

At step 1003, a fifth public key certificate is obtained by signing the sixth public key with a fifth private key.

For related introduction to the fifth public key certificate, reference may be made to description of the above embodiments.

In some embodiments, the method of the server generating the fifth public key certificate may include: obtaining a fifth signature by signing the sixth public key using the fifth private key, and generating the fifth public key certificate based on the fifth signature and the sixth public key.

At step 1004, at least one of a first public key certificate, a fourth public key certificate or the fifth public key certificate is sent to the third device and/or a second device.

In some embodiments, in response to the server being able to communicate with the second device (i.e., the second device being online), the server sends the fourth public key certificate and the fifth public key certificate to the second device, and sends at least one of the first public key certificate, the fourth public key certificate or the fifth public key certificate to the third device, e.g., sending the first public key certificate to the third device, or sending the first public key certificate, the fourth public key certificate and the fifth public key certificate to the third device. Therefore, the second device may obtain the sixth public key of the third device by verifying the fourth public key certificate and the fifth public key certificate, while the third device may obtain the second public key of the second device by verifying the first public key certificate, which may realize public key exchange between the third device and the second device. This allows the third device and the second device to establish secure communication based on their own private keys and each other's public keys.

In other embodiments, in response to the server being unable to communicate with the second device (i.e., the second device being offline), the server may send the first public key certificate, the fourth public key certificate and the fifth public key certificate to the third device, and the third device may subsequently forward the fourth public key certificate and the fifth public key certificate to the second device, which may also realize the public key exchange between the third device and the second device. This allows the third device and the second device to establish secure communication based on their own private keys and each other's public keys.

For detailed descriptions of steps 1001-1004, reference may be made to description of the above embodiments.

To sum up, in the key exchange method provided by the embodiment of the disclosure, the server transfers the sixth public key of the third device to the second device by sending the fourth public key certificate and the fifth public key certificate to the second device, and transfers the second public key of the second device to the third device by sending the first public key certificate to the third device, thus achieving public key exchange between the third device and the second device, and ensuring secure communication between the second device and the third device.

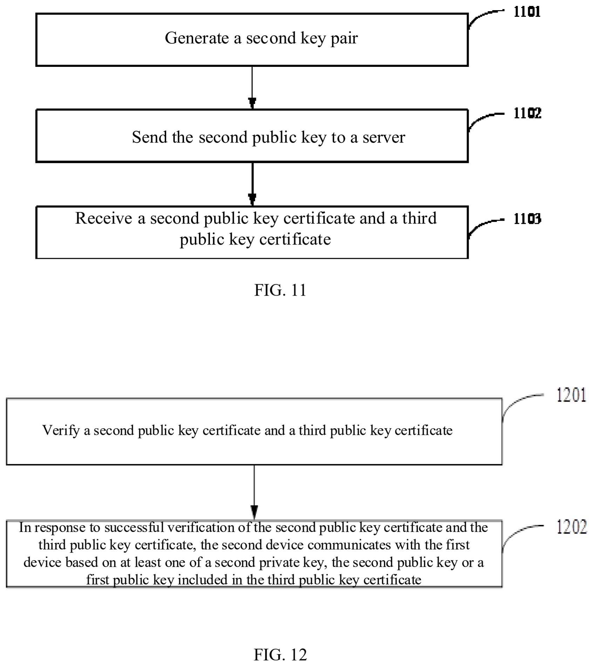

FIG.11 is a flowchart of a key exchange method provided by an embodiment of the disclosure. The method is performed by a second device. As illustrated in FIG. 11, the method includes the following steps.

At step 1101, a second key pair is generated.

In an embodiment of the disclosure, the second key pair includes a second public key and a second private key.

At step 1102, the second public key is sent to a server.

At step 1103, a second public key certificate and a third public key certificate are received.

In an embodiment of the disclosure, the second public key certificate includes a fourth public key in a fourth key pair. The fourth key pair includes the fourth public key and a fourth private key and is generated by the server. The third public key certificate includes a first public key in a first key pair. The first key pair is generated by a first device, and the first device is a device to be communicated with the second device. The third public key certificate is obtained after being signed with the fourth private key.

In some embodiments, the second public key certificate and the third public key certificate are sent to the second device by the server and/or the first device.

For detailed descriptions of steps 1101-1103, reference may be made to description of the above embodiments.

To sum up, in the key exchange method provided by the embodiment of the disclosure, the first device and the second device may exchange their public keys through the server, so that the first device and the second device establish encrypted communication based on their own private keys and each other's public keys, thus ensuring communication security. The method in the disclosure may realize the mechanism of "one device, one key" and exchange the public keys via the server without exchanging the private keys, thus further ensuring the communication security. Moreover, the method in the disclosure may realize public key exchange between the first device and the second device over a long distance, with few applicability limitations, high flexibility and high stability, thereby improving user experience. The method in the disclosure may also enable public key exchange between cross-platform or cross-brand devices, thus broadening the scope of applicability, without a need for connection between different device manufacturers, and reducing operation complexity.

FIG. 12 is a flowchart of a key exchange method provided by an embodiment of the disclosure. The method is performed by a second device. As illustrated in FIG. 12, the method includes the following steps.

At step 1201, a second public key certificate and a third public key certificate are verified.

In an embodiment of the disclosure, a first public key certificate is obtained after being signed with a third private key in a third key pair.

The second public key certificate is obtained after being signed with the third private key in the third key pair.

The third key pair includes the third private key and a third public key and is generated by the server, and the third public key in the third key pair is prec onfigured in a first device and the second device.

Verifying the second public key certificate and the third public key certificate includes:
obtaining a fourth public key by verifying the second public key certificate based on the third public key; and
verifying the third public key certificate based on the fourth public key.

For detailed description of step 1201, reference may be made to description of the above embodiments.

At step 1202, in response to successful verification of the second public key certificate and the third public key certificate, the second device communicates with the first device based on at least one of a second private key, the second public key or a first public key included in the third public key certificate.

In an embodiment of the disclosure, the method of the second device communicating with the first device based on at least one of the second private key, the second public key or the first public key included in the third public key certificate may include: when the first device is to be sent information to the first device, signing, by the second device, information to be sent with the second private key generated by the second device itself, encrypting signed information by using the first public key generated by the first device, and sending encrypted information to the first device. After receiving the information sent by the second device, the first device may sign and verify the received information using the second public key generated by the second device which is obtained from the server, and then decrypt the information using the first private key generated by the first device, thus realizing key-based secure communication between the first device and the second device.

For detailed descriptions of steps 1201-1202, reference may be made to description of the above embodiments.

It should be noted that in other embodiments, after the verification of the second public key certificate and the third public key certificate is successful, the second device may not communicate with the first device based on at least one of the second public key, the second private key, or the first public key included in the third public key certificate. Instead, the second device may generate a temporary symmetric key through key negotiation with the first device (e.g., using a Diffie-Hellman algorithm), and then communicate with the first device based on the temporary symmetric key, which may reduce complexity of encrypted communication.

To sum up, in the key exchange method provided by the embodiment of the disclosure, after receiving the second public key certificate and the third public key certificate, the second device first verifies the second public key certificate and the third public key certificate. When the verification of both the second public key certificate and the third public key certificate is successful, the second device communicates with the first device based on at least one of the second private key, the second public key or the first public key included in the third public key certificate, thus ensuring security of communication between the first device and the second device.

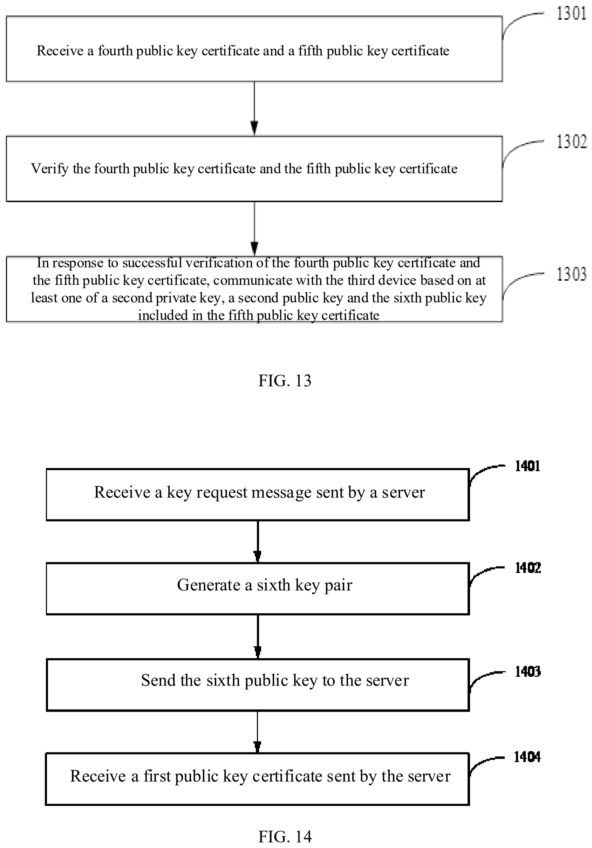

FIG. 13 is a flowchart of a key exchange method provided by an embodiment of the disclosure. The method is performed by a second device. As illustrated in FIG. 13, the method includes the following steps.

At step 1301, a fourth public key certificate and a fifth public key certificate are received.

In an embodiment of the disclosure, the fourth public key certificate includes a fifth public key in a fifth key pair. The fifth key pair includes the fifth public key and a fifth private key and is generated by a server. The fourth public key certificate is signed by a first private key in a first key pair. The fifth public key certificate includes a sixth public key in a sixth key pair. The sixth key pair includes the sixth public key and a sixth private key and is generated by a third device. The third device is a device to be authorized by a first device to communicate with the second device. The fifth public key certificate is obtained after being signed by the fifth private key.

In an embodiment of the disclosure, the fourth public key certificate and the fifth public key certificate are sent to the second device by the server and/or the third device.

For detailed descriptions of the fourth public key certificate and the fifth public key certificate, reference may be made to the description of the above embodiments.

At step 1302, the fourth public key certificate and the fifth public key certificate are verified.

In an embodiment of the disclosure, as described in the above embodiments, the fourth public key certificate includes a fourth signature and the fifth public key. The fourth signature is obtained after being signed with the first private key. The fifth public key certificate includes a fifth signature and the sixth public key. The fifth signature is obtained after being signed with the fifth private key. The second device and the first device have exchanged respective public keys before acquiring the fourth public key certificate and the fifth public key certificate, that is, the second device has already known the first public key of the first device before acquiring the fourth public key certificate and the fifth public key certificate. On the basis of this, the method of the server verifying the fourth public key certificate and the fifth public key certificate at step 1302 may include the following steps.

Step A: the fifth public key is obtained by verifying the fourth public key certificate using the first public key.

In an embodiment of the disclosure, the first device decrypts the fourth signature in the fourth public key certificate using the first public key and obtains a decrypted result. The first device checks whether the decrypted result is consistent with the fifth public key in the fourth public key certificate through comparison. If consistent, it is determined that the fourth public key certificate is generated by the first device and it indicates that a source of the fourth public key certificate is trustworthy, and it is considered that the fourth public key certificate (e.g., the fifth public key in the fourth public key certificate) is trustworthy, and the first device determines that verification of the fourth public key certificate is successful. If inconsistent, it is determined that the fourth public key certificate is not generated by the first device and it indicates that the source of the fourth public key certificate is untrustworthy, and it is considered that the fourth public key certificate (e.g., the fifth public key in the fourth public key certificate) is untrustworthy, and the first device determines that the verification of the fourth public key certificate fails.

Step B: the fifth public key certificate is verified based on the fifth public key.

In an embodiment of the disclosure, the first device decrypts the fifth signature in the fifth public key certificate using the fifth public key and obtains a decrypted result. The first device may check whether the decrypted result is consistent with the sixth public key in the fifth public key certificate through comparison. If consistent, it is determined that the fifth public key certificate is generated by the server and it indicates that a source of the fifth public key certificate is trustworthy, and it is considered that the fifth public key certificate (e.g., the sixth public key in the fifth public key certificate) is trustworthy, and the first device determines that the verification the fifth public key certificate is successful. If inconsistent, it is determined that the fifth public key certificate is not generated by the server and it indicates that a source of the fifth public key certificate is untrustworthy, and it is considered that the fifth public key certificate (e.g., the sixth public key in the fifth public key certificate) is untrustworthy, and the first device determines that the verification of the fifth public key certificate fails.

At step 1303, in response to successful verification of the fourth public key certificate and the fifth public key certificate, the second device communicates with the third device based on at least one of a second private key, a second public key and the sixth public key included in the fifth public key certificate.

In an embodiment of the disclosure, the method of the second device communicating with the third device based on at least one of the second private key, the second public key and the sixth public key included in the fifth public key certificate includes: when the second device is to be sent information to the third device, signing, by the second device, information to be sent with the second private key generated by the second device, encrypting signed information by using the sixth public key generated by the third device, and sending encrypted information to the third device. After receiving the information sent by the second device, the third device may sign and verify the received information using the second public key generated by the second device which is obtained from the server, and then decrypt the information using the sixth private key generated by the third device itself, thus realizing key-based secure communication between the third device and the second device.

It should be noted that in other embodiments, after the verification of the fourth public key certificate and the fifth public key certificate is successful, the second device may not communicate with the third device based on at least one of the second private key, the second public key and the sixth public key included in the fifth public key certificate. Instead, the second device may generate a temporary symmetric key through key negotiation with the third device (e.g., using a Diffie-Hellman algorithm), and then communicate with the third device based on the temporary symmetric key, which may reduce complexity of encrypted communication.

To sum up, in the key exchange method provided by the embodiment of the disclosure, after receiving the fourth public key certificate and the fifth public key certificate, the second device first verifies the fourth public key certificate and the fifth public key certificate. When the verification of the fourth public key certificate and the fifth public key certificate is successful, the second device communicates with the third device based on at least one of the second private key, the second public key or the sixth public key included in the fifth public key certificate, which ensures the communication security between the third device and the second device.

FIG. 14 is a flowchart of a key exchange method provided by an embodiment of the disclosure. The method is performed by a third device. As illustrated in FIG. 14, the method includes the following steps.

At step 1401, a key request message sent by a server is received.

At step 1402, a sixth key pair is generated.

In an embodiment of the disclosure, the sixth key pair includes a sixth public key and a sixth private key.

In an embodiment of the disclosure, the third device generates the sixth key pair via a DKF APP programming interface (API).

At step 1403, the sixth public key is sent to the server.

At step 1404, a first public key certificate sent by the server is received.

In an embodiment of the disclosure, the first public key certificate includes a second public key in a second key pair, the second key pair is generated by a second device and includes the second public key and a second private key, and the second device is a device to be communicated with the third device.

For detailed descriptions of steps 1401-1404, reference may be made to description of the above embodiments.

To sum up, in the key exchange method provided by the embodiment of the disclosure, the third device and the second device may exchange their public keys through the server, so that the third device and the second device establish encrypted communication based on their own private keys and each other's public keys, thus ensuring communication security. The method in the disclosure may realize the mechanism of "one device, one key" and exchange the public keys via the server without exchanging the private keys, thus further ensuring the communication security. Moreover, the method in the disclosure may realize public key exchange between the third device and the second device over a long distance, with few applicability limitations, high flexibility and high stability, thereby improving user experience. The method in the disclosure may also enable public key exchange between cross-platform or cross-brand devices, thus broadening the scope of applicability, without a need for connection between different device manufacturers, and reducing operation complexity.

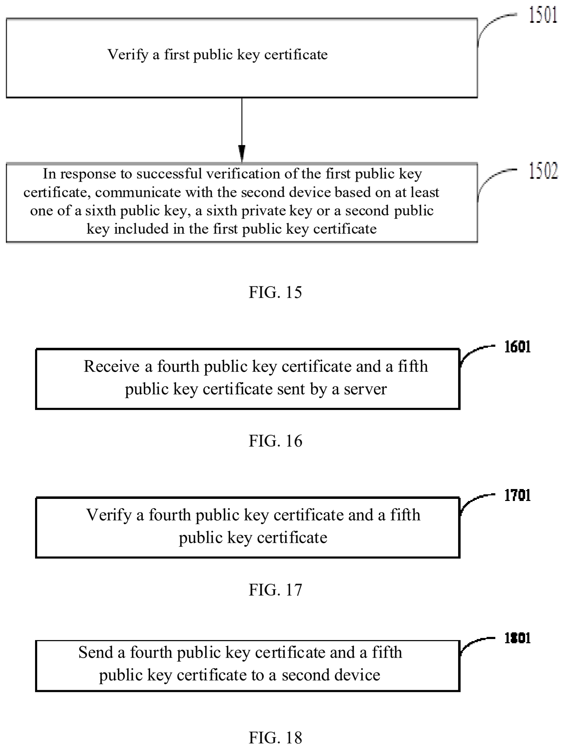

FIG. 15 is a flowchart of a key exchange method provided by an embodiment of the disclosure. The method is performed by a third device. As illustrated in FIG. 15, the method includes the following steps.

At step 1501, a first public key certificate is verified.

In an embodiment of the disclosure, the first public key certificate is obtained by signing it with a third private key in a third key pair, the third key pair includes the third private key and a third public key and is generated by a server, and the third public key in the third key pair is preconfigured in the third device and a second device.

Verifying the first public key certificate, includes:

verifying the first public key certificate based on the third public key.

At step 1502, in response to successful verification of the first public key certificate, the third device communicates with the second device based on at least one of a sixth public key, a sixth private key or a second public key included in the first public key certificate.

In an embodiment of the disclosure, the method of the third device communicating with the second device based on at least one of the sixth public key, the sixth private key or the second public key included in the first public key certificate may include: when the third device is to be sent information to the second device, signing, by the third device, information to be sent with the sixth private key generated by the third device itself, encrypting signed information by using the second public key generated by the second device, and sending the encrypted information to the second device. After receiving the information sent by the third device, the second device may sign and verify the received information using the sixth public key generated by the third device which is obtained from the server, and then decrypt the information using the second private key generated by the second device itself, thus realizing key-based secure communication between the third device and the second device.

It should be noted that in other embodiments, after the verification of the first public key certificate is successful, the third device may not communicate with the second device based on at least one of the sixth public key, the sixth private key or the second public key included in the first public key certificate. Instead, the third device may generate a temporary symmetric key through key negotiation with the second device (e.g., using a Diffie-Hellman algorithm), and then communicate with the second device based on the temporary symmetric key, which may reduce complexity of encrypted communication.

For detailed descriptions of steps 1501-1502, reference may be made to description of the above embodiments.

To sum up, in the key exchange method provided by the embodiment of the disclosure, after receiving the first public key certificate, the third device first verifies the first public key certificate, and then communicates with the second device based on the at least one of the sixth public key, the sixth private key or the second public key included in the first public key certificate when the verification of the first public key certificate is successful, which may ensure the communication security between the third device and the second device.

FIG. 16 is a flowchart of a key exchange method provided by an embodiment of the disclosure. The method is performed by a third device. As illustrated in FIG. 16, the method includes the following step.

At step 1601, a fourth public key certificate and a fifth public key certificate sent by a server is received.

In an embodiment of the disclosure, the fourth public key certificate includes a fifth public key in a fifth key pair. The fifth key pair includes the fifth public key and a fifth private key and is generated by the server. The fourth public key certificate is obtained after being signed with a first private key in a first key pair. The fifth public key certificate includes a sixth public key, and it is obtained after being signed by the fifth private key.

For detailed descriptions of steps 1601, reference may be made to description of the above embodiments.

To sum up, in the key exchange method provided by the embodiment of the disclosure, the first device receives the fourth public key certificate and the fifth public key certificate sent by the server. The fourth public key certificate and the fifth public key certificate are used to transmit the sixth public key of the third device. Therefore, the third device sends the fourth public key certificate and the fifth public key certificate to the second device to transfer the sixth public key of the third device to the second device, to realize public key exchange between the third device and the second device. On the basis of this, when the third device communicates with the second device, the third device and the second device establish encrypted communication based on their own private keys and each other's public keys, thereby ensuring communication security.

FIG. 17 is a flowchart of a key exchange method provided by an embodiment of the disclosure. The method is performed by a third device. As illustrated in FIG. 17, the method includes the following step.

At step 1701, a fourth public key certificate and a fifth public key certificate are verified.

In an embodiment of the disclosure, the method of the third device verifying the fourth public key certificate and the fifth public key certificate may include: obtaining a fifth public key by verifying the fourth public key certificate based on a first public key acquired in advance, and verifying the fifth public key certificate based on the fifth public key.

For detailed descriptions of steps 1701, reference may be made to description of the above embodiments.

To sum up, in the key exchange method provided by the embodiment of the disclosure, after receiving the fourth public key certificate and the fifth public key certificate sent by the server, the third device verifies the fourth public key certificate and the fifth public key certificate, thereby ensuring security and stability of certificate transmission.

FIG. 18 is a flowchart of a key exchange method provided by an embodiment of the disclosure. The method is performed by a third device. As illustrated in FIG. 18, the method includes the following step.

At step 1801, a fourth public key certificate and a fifth public key certificate are sent to a second device.

For detailed descriptions of steps 1801, reference may be made to description of the above embodiments.

To sum up, in the key exchange method provided by the embodiment of the disclosure, the first device transmits the fourth public key certificate and the fifth public key certificate received to the second device to transfer a sixth public key of the third device to the second device, to realize public key exchange between the third device and the second device. On the basis of this, when the third device communicates with the second device, the third device and the second device establish encrypted communication based on their own private keys and each other's public keys, thereby ensuring communication security.

In addition, it should be noted that in the embodiment of the disclosure, when receiving any of the aforementioned public keys (e.g., the first public key or the second public key) and/or any of the aforementioned public key certificates (e.g., the first public key certificate or the second public key certificate), the server or each of the devices (e.g., the first device, the second device or the third device) may store any public key and/or any public key certificate received. In an embodiment of the disclosure, each device may store any public key and/or any public key certificate received in secure hardware of the device, and each device may also store its own private key within the secure hardware of the device. The server may also store a private key in a key pair generated by itself, e.g., the fourth private key in the fourth key pair and the fifth private key in the fifth key pair, etc.

In an embodiment of the disclosure, the method for transmitting any of the aforementioned public keys may include: directly transmitting the public key, or transmitting a CSR including the public key to be transmitted.

The method of the disclosure is explained below by examples.

In some embodiments, when a vehicle (i.e., the aforementioned second device) and a device (i.e., the above first device) establish a secure channel (i.e., exchange their public keys), the following certificates are required:
1) a vehicle server certificate (CA) (A): which is a CA corresponding to a vehicle server key pair and is generated by a vehicle server (where the vehicle server is the aforementioned server, and the vehicle server key pair is the aforementioned third key pair) and is served as a root CA of a digital key system;
2) a vehicle intermediate pairing CA (B) (i.e., the above second public key certificate): which is generated by the vehicle server, signed by a private key (i.e., the above third private key) corresponding to the vehicle server CA (A), and stored on the vehicle server;
3) a vehicle owner digital key CA (C) (i.e., the above third public key certificate): which includes a key pair generated by a device (e.g., a mobile phone or a wearable device) and is signed by a private key (i.e., the fourth private key) corresponding to the vehicle intermediate pairing CA (B), and shall be transferred to the vehicle in a case of key activation; and
4) a vehicle public key CA (D) (i.e., the above first public key certificate): which includes a key pair generated by the vehicle, and is formed by signing a public key (i.e., the above second public key) with a private key (i.e., the above third private key) corresponding to the vehicle server CA (A), and shall be transferred to the device in a case of key activation.

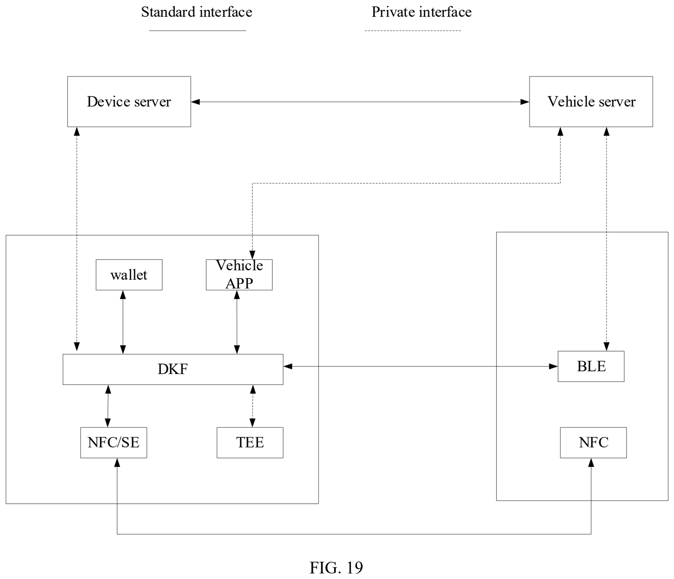

In an embodiment of the disclosure, FIG. 19 is a schematic diagram illustrating connections between respective devices provided by an embodiment of the disclosure. FIG. 19 illustrates both a standard interface and a private interface. The private interface may be provided for connections between devices from the same manufacturer, a device and an APP from the same manufacturer, or devices of the same type, and the standard interface is provided for connections between devices from different manufacturers, a device and an APP from different manufacturers, or devices of different types. For example, a DKF in a mobile phone and a Bluetooth low energy (BLE) module in a vehicle belong to different manufacturers, so they are connected via the standard interface. Moreover, since a vehicle APP in the mobile phone and the vehicle server belong to the same manufacturer, so they are connected via the private interface.

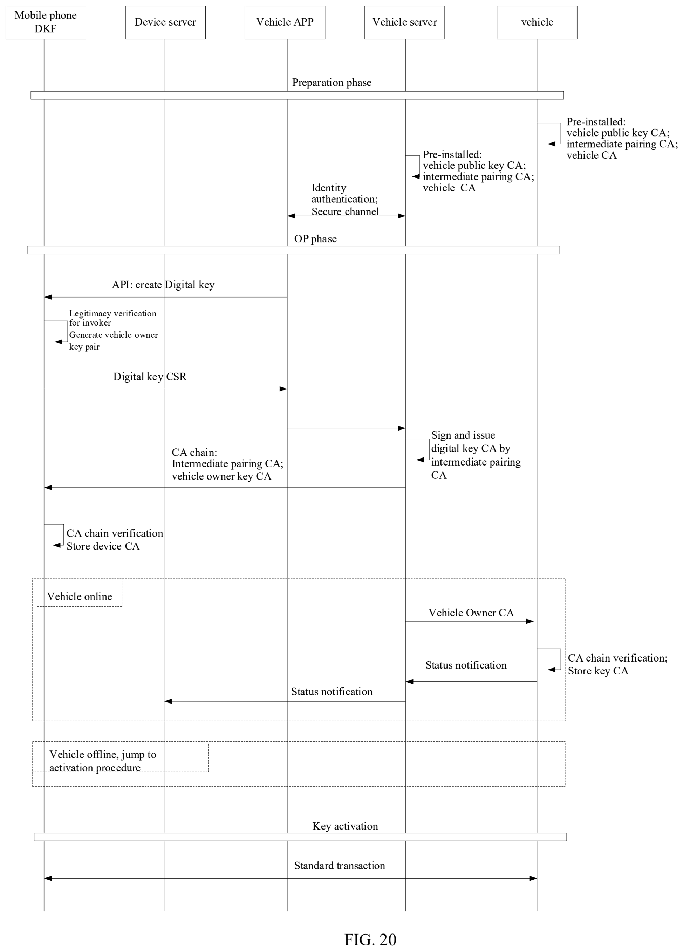

FIG. 20 is a schematic diagram illustrating an interaction procedure corresponding to a method for establishing a secure channel between a vehicle and a device provided by an embodiment of the disclosure. As illustrated in FIG. 20, in order to establish the secure channel, it is required to first perform the following operations:
a vehicle: being pre-installed with the vehicle CA, the vehicle intermediate pairing CA, and the vehicle server CA.
a vehicle server: being pre-installed with the vehicle CA, the vehicle intermediate pairing CA and its public key and private key, the vehicle server CA and its public key and private key.
completion of user ID authentication by the vehicle server (i.e., "the server has completed the ID authentication of the user of the first device" as described above);
the vehicle APP (i.e., the aforementioned first APP) having established a secure channel with the vehicle server (i.e., "the first APP has established the secure channel with the server" as described above); and
the DKF (i.e., the above first module) completing legitimacy verification of the vehicle App (i.e., "the first module has completed the legitimacy verification of the first APP" as described above).

As illustrated in FIG. 20, a primary procedure for establishing the secure channel between the vehicle and the device is provided as follows.

A user selects "digital key activation" on a vehicle APP.

The vehicle APP invokes a DKF interface to generate a digital key (i.e., the first key pair).

The DKF uses secure hardware (e.g., SE or TEE) to generate a key pair (i.e., the first key pair) of the digital key, a private key (i.e., the first private key) within the key pair is stored in the secure hardware, while a public key (i.e., the first public key) within the key pair or a CSR is returned to the vehicle APP.

The vehicle APP sends the public key within the key pair of the digital key or the CSR to a vehicle server. The vehicle server uses a private key (i.e., the fourth private key) corresponding to the vehicle intermediate pairing CA (B) to sign the public key or the CSR and issues a digital key public key CA (C).

The vehicle server sends the vehicle intermediate pairing CA (B), the digital key public key CA (C), and the vehicle public key CA (D) to a mobile phone via the vehicle APP. The mobile phone stores these CAs in its secure hardware.

If the vehicle is online, the vehicle server simultaneously sends the vehicle intermediate pairing CA (B) and the digital key public key CA (C) to the vehicle. At this point, the device and the vehicle have completed public key CA exchange, and the keys are ready for use.

If the vehicle remains offline throughout a period before the user's use, when the user uses it for the first time, the vehicle reads the vehicle intermediate pairing CA (B) and the digital key public key CA (C) from the mobile phone, and then verifies legitimacy of a CA chain and stores the digital key public key CA (C) after verification. The digital key becomes usable thereafter.

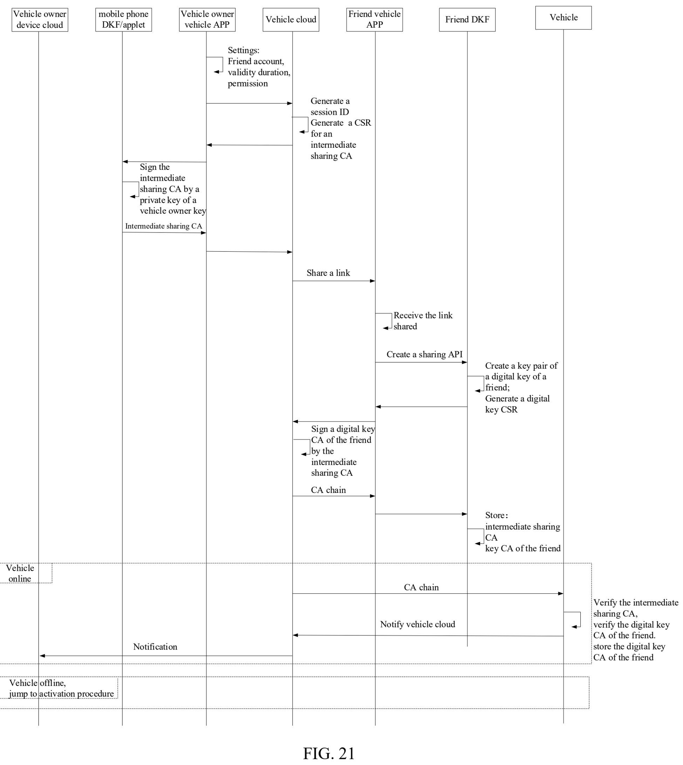

In an embodiment of the disclosure, FIG. 21 is a schematic diagram illustrating an interaction procedure corresponding to a method for sharing a secure channel (i.e., the method for the first device to authorize the third device to communicate with the second device) provided by an embodiment of the disclosure. As illustrated in FIG. 21, when sharing the secure channel, the following CAs are required:
1) a vehicle server CA (A): which is generated by a vehicle server, and is served as a root CA of a digital key system;
2) a vehicle intermediate sharing CA (E) (i.e., the fourth public key certificate): which is generated by the vehicle server, signed and issued by a private key (i.e., the first public key) corresponding to the vehicle owner digital key CA (C), and is a one-time CA used exclusively for the current sharing session;
3) a sharing digital key CA (F) (i.e., the fifth public key certificate), which includes a key pair (i.e., the sixth key pair) generated by a device (e.g., a mobile phone or a wearable device), and is signed and issued by a private key (i.e., the fifth private key) corresponding to the vehicle intermediate sharing CA (E), and shall be sent to the vehicle during key sharing; and
4) a vehicle public key CA (D), which includes a key pair generated by a vehicle, and is generated by signing and issuing by a private key corresponding to the vehicle server CA (A), and shall be sent to the device during the key sharing.

As illustrated in FIG. 20, a primary procedure for sharing the secure channel on the device side is provided as follows.

A vehicle owner selects an object to be shared (i.e., the aforementioned third device) on a vehicle APP, and sets a validity duration (i.e., the aforementioned communication validity duration), a permission (i.e., the aforementioned control permission) and other parameters. The vehicle APP uploads information (i.e., the aforementioned information associated with the third device) to a vehicle server.

The vehicle server generates a key pair (i.e., the aforementioned fifth key pair) for the vehicle intermediate sharing CA (E). A private key (i.e., the aforementioned fifth private key) in the key pair is stored on the vehicle server, while a public key (i.e., the aforementioned fifth public key) in the key pair or a CSR is sent to a mobile phone (i.e., the aforementioned first device) of the vehicle owner via the vehicle App.

The mobile phone of the vehicle owner uses a private key (i.e., the aforementioned first private key) corresponding to the vehicle owner digital key CA (C) to sign and issue the vehicle intermediate sharing certificate (E) and then uploads the vehicle intermediate sharing certificate (E)to the vehicle server via the vehicle APP.

The vehicle server issues and pushes a sharing message (i.e., the aforementioned key request message) to a vehicle APP on a mobile phone of a friend. The vehicle APP uses a DKF API on the mobile phone of the friend (i.e., the aforementioned third device) to generate a key pair of a digital key (i.e., the sixth key pair) for the friend. A private key (i.e., the sixth private key) in the key pair is stored in a secure hardware of the mobile phone of the friend, while a public key (i.e., the sixth public key) in the key pair or a CSR is sent to the vehicle server. The vehicle server generates a shared digital key CA(F) by signing the public key in the key pair or the CSR with a private key corresponding to a vehicle intermediate sharing CA(E).

The vehicle server sends the vehicle public key CA (D), the shared digital key CA (F), and the vehicle intermediate sharing CA (E) to the mobile phone of the friend via the vehicle APP, and these CAs are stored in the secure hardware of the mobile phone.

If the vehicle is online, the vehicle server sends the shared digital key CA(F) and the vehicle intermediate sharing CA(E) to the vehicle. At this point, the device and the vehicle have completed public key CA exchange, and the keys are ready for use.

If the vehicle remains offline throughout a period before the user's use, when the user uses the vehicle for the first time, the vehicle reads the shared digital key CA(F) and the vehicle intermediate sharing CA(E) from the mobile phone, and then verifies the vehicle intermediate sharing CA(E) using the vehicle owner digital key CA(C) and verifies the shared digital key CA (F) using the vehicle intermediate sharing CA (E). After being verified, the shared digital key CA (F) is stored. Thus, the device and the vehicle have completed public key CA exchange, and the keys are ready for use.

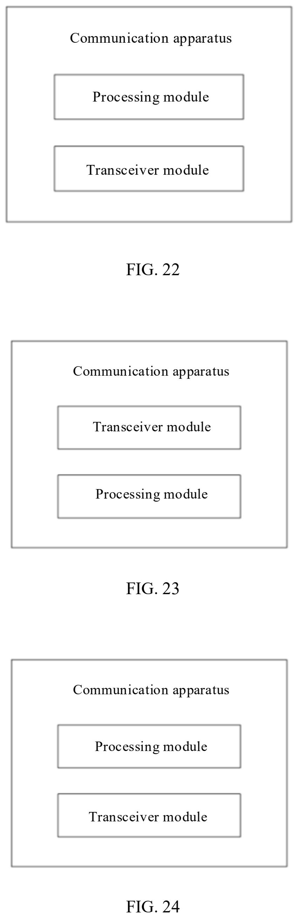

FIG. 22 is a schematic structural diagram of a communication apparatus provided by an embodiment of the disclosure. As illustrated in FIG. 22, the apparatus includes:
a processing module, configured to generate a first key pair including a first public key and a first private key;
a transceiver module, configured to send the first public key to a server; and
the transceiver module, further configured to receive a first public key CA sent by the server, in which the first public key CA includes a second public key in a second key pair, the second key pair is generated by a second device and includes the second public key and a second private key, and the second device is a device to be communicated with a first device.

To sum up, in the communication apparatus provided by the embodiment of the disclosure, the first device and the second device may exchange their public keys through the server, so that the first device and the second device establish encrypted communication based on their own private keys and each other's public keys, thus ensuring communication security. The method in the disclosure may realize the mechanism of "one device, one key" and exchange the public keys via the server without exchanging the private keys, thus further ensuring the communication security. Moreover, the method in the disclosure may realize public key exchange between the first device and the second device over a long distance, with few applicability limitations, high flexibility and high stability, thereby improving user experience. The method in the disclosure may also enable public key exchange between cross-platform or cross-brand devices, thus broadening the scope of applicability, without a need for connection between different device manufacturers, and reducing operation complexity.

In an embodiment of the disclosure, the transceiver module is further configured to:
send a first CSR to the server, in which the first CSR includes the first public key.

In an embodiment of the disclosure, the apparatus is further configured to:
verify the first public key CA; and
in response to successful verification of the first public key CA, communicate with the second device based on at least one of the first public key, the first private key, or the second public key included in the first public key CA.

In an embodiment of the disclosure, the first public key CA is obtained after being signed with a third private key in a third key pair, the third key pair includes the third private key and a third public key and is generated by the server, and the third public key in the third key pair is preconfigured in the first device and the second device; and
the processing module is further configured to:
verify the first public key CA based on the third public key.

In an embodiment of the disclosure, the transceiver module is further configured to:
receive a second public key CA and a third public key CA sent by the server; in which the second public key CA includes a fourth public key in a fourth key pair, the fourth key pair includes the fourth public key and a fourth private key and is generated by the server, the second public key CA is obtained after being signed with a third private key in a third key pair, and the third public key CA includes the first public key and is obtained after being signed with the fourth private key.

In an embodiment of the disclosure, the apparatus is further configured to:
obtain the fourth public key by verifying the second public key CA based on the third public key; and
verify the third public key CA based on the fourth public key.

In an embodiment of the disclosure, the apparatus is further configured to:
send the second public key CA and the third public key CA to the second device.

In an embodiment of the disclosure, the apparatus is further configured to:
determine information associated with a third device, in which the third device is a device to be authorized by the first device to communicate with the second device;
send the information associated with the third device to the server;
receive a fifth public key sent by the server, in which the fifth public key belongs to a fifth key pair, the fifth key pair includes the fifth public key and a fifth private key and is generated by the server;
obtain a fourth public key CA by signing the fifth public key with the first private key; and
send the fourth public key CA to the server.

FIG. 23 is a schematic structural diagram of a communication apparatus provided by an embodiment of the disclosure. As illustrated in FIG. 23, the apparatus includes:
a transceiver module, configured to receive a first public key sent by a first device, in which the first public key belongs to a first key pair, the first key pair includes the first public key and a first private key and is generated by the first device;
the transceiver module, further configured to receive a second public key sent by a second device, in which the second public key belongs to a second key pair, the second key pair includes the second public key and a second private key and is generated by the second device, and the second device is a device to be communicated with the first device;
a processing module, configured to generate at least one of a first public key CA, a second public key CA or a third public key CA, in which the first public key CA includes the second public key in the second key pair; the second public key CA includes a fourth public key in a fourth key pair, and the fourth key pair includes the fourth public key and a fourth private key; and the third public key CA includes the first public key, and the third public key CA is obtained after being signed with the fourth private key; and
the transceiver module, further configured to send at least one of the first public key CA, the second public key CA or the third public key CA to the first device and/or the second device.

To sum up, in the communication apparatus provided by the embodiment of the disclosure, the first device and the second device may exchange their public keys through the server, so that the first device and the second device establish encrypted communication based on their own private keys and each other's public keys, thus ensuring communication security. The method in the disclosure may realize the mechanism of "one device, one key" and exchange the public keys via the server without exchanging the private keys, thus further ensuring the communication security. Moreover, the method in the disclosure may realize public key exchange between the first device and the second device over a long distance, with few applicability limitations, high flexibility and high stability, thereby improving user experience. The method in the disclosure may also enable public key exchange between cross-platform or cross-brand devices, thus broadening the scope of applicability, without a need for connection between different device manufacturers, and reducing operation complexity.

In an embodiment of the disclosure, the apparatus is further configured to:
generate a third key pair and the fourth key pair, in which a third public key of the third key pair is preconfigured in the first device and the second device.

In an embodiment of the disclosure, the first public key CA is obtained after being signed with a third private key in the third key pair; and
the second public key CA is obtained after being signed with the third private key in the third key pair.

In an embodiment of the disclosure, the transceiver module is further configured to:
in response to the server being able to communicate with the second device, send the second public key CA and the third public key CA to the second device, and send the first public key CA, the second public key CA and the third public key CA to the first device; or
in response to the server being unable to communicate with the second device, send the first public key CA, the second public key CA and the third public key CA to the first device.

In an embodiment of the disclosure, the apparatus is further configured to:
receive information associated with a third device sent by the first device, in which the third device is a device to be authorized by the first device to communicate with the second device;
generate a fifth key pair, in which the fifth key pair includes a fifth public key and a fifth private key;
send the fifth public key to the first device; and
receive a fourth public key CA sent by the first device, in which the fourth public key CA includes the fifth public key, and the fourth public key CA is obtained by being signed with the first private key in the first key pair.

In an embodiment of the disclosure, the apparatus is further configured to:
send a key request message to the third device;
receive a sixth public key sent by the third device, in which the sixth public key belongs to a sixth key pair, the sixth key pair includes the sixth public key and a sixth private key, and the sixth key pair is generated by the third device;
obtain a fifth public key CA by signing the sixth public key with the fifth private key; and
send at least one of the first public key CA, the fourth public key CA or the fifth public key CA to the third device and/or the second device.

In an embodiment of the disclosure, the apparatus is further configured to:
in response to the server being able to communicate with the second device, send the fourth public key CA and the fifth public key CA to the second device, and send the first public key CA, the fourth public key CA and the fifth public key CA to the third device; or
in response to the server being unable to communicate with the second device, send the first public key CA, the fourth public key CA and the fifth public key CA to the third device.

FIG. 24 is a schematic structural diagram of a communication apparatus provided by an embodiment of the disclosure. As illustrated in FIG. 24, the apparatus includes:
a processing module, configured to generate a second key pair, in which the second key pair includes a second public key and a second private key;
a transceiver module, configured to send the second public key to a server; and
the transceiver module, further configured to receive a second public key CA and a third public key CA, in which the second public key CA includes a fourth public key in a fourth key pair; the fourth key pair includes the fourth public key and a fourth private key, and the fourth key pair is generated by the server; the third public key CA includes a first public key in a first key pair, and the first key pair is generated by a first device, the first device is a device to be communicated with a second device; and the third public key CA is obtained after being signed with the fourth private key.

To sum up, in the communication apparatus provided by the embodiment of the disclosure, the first device and the second device may exchange their public keys through the server, so that the first device and the second device establish encrypted communication based on their own private keys and each other's public keys, thus ensuring communication security. The method in the disclosure may realize the mechanism of "one device, one key" and exchange the public keys via the server without exchanging the private keys, thus further ensuring the communication security. Moreover, the method in the disclosure may realize public key exchange between the first device and the second device over a long distance, with few applicability limitations, high flexibility and high stability, thereby improving user experience. The method in the disclosure may also enable public key exchange between cross-platform or cross-brand devices, thus broadening the scope of applicability, without a need for connection between different device manufacturers, and reducing operation complexity.

In an embodiment of the disclosure, the apparatus is further configured to:
verify the second public key CA and the third public key CA; and
in response to successful verification of the second public key CA and the third public key CA, communicate with the first device based on at least one of the second private key, the second public key or the first public key included in the third public key CA.

In an embodiment of the disclosure, the second public key CA is obtained after being signed with a third private key in a third key pair;
in which the third key pair includes the third private key and a third public key, the third key pair is generated by the server, and the third public key in the third key pair is preconfigured in the first device and the second device; and
the processing module is further configured to:
obtain the fourth public key by verifying the second public key CA based on the third public key; and
verify the third public key CA based on the fourth public key.

In an embodiment of the disclosure, the transceiver module is further configured to:
receive the second public key CA and the third public key CA sent by the first device and/or the server.

In an embodiment of the disclosure, the apparatus is further configured to:
receive a fourth public key CA and a fifth public key CA, in which the fourth public key CA includes a fifth public key belonging to a fifth key pair; the fifth key pair includes the fifth public key and a fifth private key, the fifth key pair is generated by the server; the fourth public key CA is obtained after being signed with a first private key in the first key pair; the fifth public key CA includes a sixth public key belonging to a sixth key pair; the sixth key pair includes the sixth public key and a sixth private key, and the sixth key pair is generated by a third device, the third device is a device to be authorized by the first device to communicate with the second device; and the fifth public key CA is obtained after being signed with the fifth private key;
verify the fourth public key CA and the fifth public key CA; and
in response to successful verification of the fourth public key CA and the fifth public key CA, communicate with the third device based on at least one of the second private key, the second public key and the sixth public key included in the fifth public key CA.

In an embodiment of the disclosure, the apparatus is further configured to:
obtain the fifth public key by verifying the fourth public key CA based on the first public key; and
verify the fifth public key CA based on the fifth public key.

In an embodiment of the disclosure, the apparatus is further configured to:
receive the fourth public key CA and the fifth public key CA sent by the third device and/or the server.

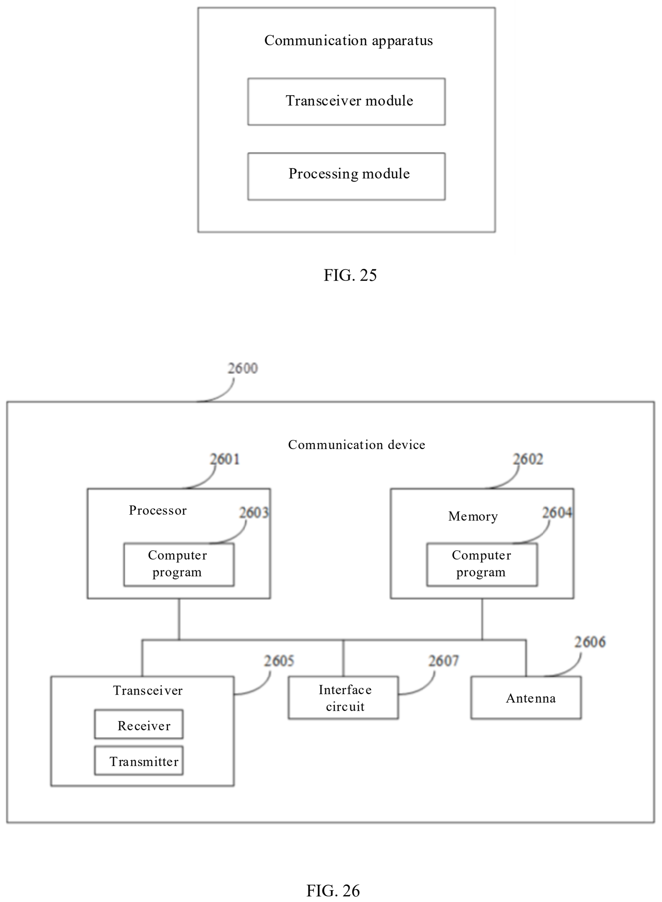

FIG. 25 is a schematic structural diagram of a communication apparatus provided by an embodiment of the disclosure. As illustrated in FIG. 25, the apparatus includes:
a transceiver module, configured to receive a key request message sent by a server;
a processing module, configured to generate a sixth key pair, in which the sixth key pair includes a sixth public key and a sixth private key;
the transceiver module, further configured to send the sixth public key to the server; and
the transceiver module, further configured to receive a first public key CA sent by the server, in which the first public key CA includes a second public key in a second key pair, the second key pair is generated by a second device and includes the second public key and a second private key, and the second device is a device to be communicated with a third device.

To sum up, in the communication apparatus provided by the embodiment of the disclosure, the third device and the second device may exchange their public keys through the server, so that the third device and the second device establish encrypted communication based on their own private keys and each other's public keys, thus ensuring communication security. The method in the disclosure may realize the mechanism of "one device, one key" and exchange the public keys via the server without exchanging the private keys, thus further ensuring the communication security. Moreover, the method in the disclosure may realize public key exchange between the third device and the second device over a long distance, with few applicability limitations, high flexibility and high stability, thereby improving user experience. The method in the disclosure may also enable public key exchange between cross-platform or cross-brand devices, thus broadening the scope of applicability, without a need for connection between different device manufacturers, and reducing operation complexity.

In an embodiment of the disclosure, the apparatus is further configured to:
verify the first public key CA; and
in response to successful verification of the first public key CA, communicate with the second device based on at least one of the sixth public key, the sixth private key or the second public key included in the first public key CA.

In an embodiment of the disclosure, the first public key CA is obtained after being signed with a third private key in a third key pair, the third key pair includes the third private key and a third public key and is generated by the server, and the third public key in the third key pair is preconfigured in the third device and the second device; and
the processing module is further configured to:
verify the first public key CA based on the third public key.

In an embodiment of the disclosure, the apparatus is further configured to:
receive a fourth public key CA and a fifth public key CA sent by the server, in which the fourth public key CA includes a fifth public key belonging to a fifth key pair; the fifth key pair includes the fifth public key and a fifth private key, and the fifth key pair is generated by the server; the fourth public key CA is obtained after being signed with a first private key in a first key pair; the fifth public key CA includes the sixth public key; and the fifth public key CA is obtained after being signed with the fifth private key.

In an embodiment of the disclosure, the apparatus is further configured to:
obtain the fifth public key by verifying the fourth public key CA based on the pre-acquired first public key; and
verify the fifth public key CA based on the fifth public key.

In an embodiment of the disclosure, the apparatus is further configured to:
send the fourth public key CA and the fifth public key CA to the second device.

FIG. 26 is a schematic structural diagram of a communication device 2600 provided by an embodiment of the disclosure. The communication device 2600 may be a bast station or a terminal, or may be a chip, a chip system or a processor that supports the bast station to implement the above method, or may be a chip, a chip system or a processor that supports the terminal to implement the above method. The device can be used to implement the method described in the above method embodiments with reference to the descriptions of the method embodiments.

The communication device 2600 includes one or more processors 801. The processor 801 may be a general purpose processor or a dedicated processor, such as, a baseband processor and a central processor. The baseband processor is used for processing communication protocols and communication data. The central processor is used for controlling the communication device (e.g., a base station, a baseband chip, a terminal, a terminal chip, a central unit (CU) or a distributed unit (DU)), executing computer programs, and proce ssing data of the computer programs.

In an embodiment of the disclosure, the communication device 2600 includes one or more memories 2602 on which a computer program 2604 is stored. The processor 2601 executes the computer programs 2604 to cause the communication device 2600 to implement the method described in the above method embodiments. In an embodiment of the disclosure, the memory 2602 may also store data. The communication device 2600 and the memory 2602 may be provided separately or may be integrated together.

In an embodiment of the disclosure, the communication device 2600 also includes a transceiver 2605 and an antenna 2606. The transceiver 2605 may be referred to as a transceiver unit, a transceiver machine or a transceiver circuit, for implementing a transceiver function. The transceiver 2605 includes a receiver and a transmitter. The receiver may be referred to as a receiving machine or a receiving circuit, for implementing a receiving function. The transmitter may be referred to as a transmitter machine or a transmitting circuit, for implementing a transmitting function.

In an embodiment of the disclosure, the communication device 2600 may also include one or more interface circuits 2607. The interface circuits 2607 are used to receive code instructions and transmit the code instructions to the processor 2601. The processor 2601 runs the code instructions to cause the communication device 2600 to implement the method described in the method embodiments.

In an implementation, the processor 2601 may include a transceiver for implementing receiving and transmitting functions. The transceiver may be, for example, a transceiver circuit, an interface or an interface circuit. The transceiver circuit, the interface or the interface circuit for implementing the receiving and transmitting functions may be separated or may be integrated together. The transceiver circuit, the interface or the interface circuit described above may be used for reading and writing code/data, or may be used for signal transmission or delivery.

In an implementation, the processor 2601 may store a computer program 2603. When the processor 2601 executes the computer program 2603, the communication device 2600 is caused to implement the method described in the method embodiments above. The computer program 2603 may be solidified in the processor 2601, and in such case the processor 2601 may be implemented by hardware.

In an implementation, the communication device 2600 may include circuits. The circuits may implement the transmitting, receiving or communicating function in the above method embodiments. The processor and the transceiver described in the disclosure may be implemented on integrated circuits (ICs), analog ICs, radio frequency ICs (RFICs), mixed signal ICs, application specific integrated circuits (ASICs), printed circuit boards (PCBs), and electronic devices. The processor and the transceiver may be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the descriptions of the above embodiments may be a base station or a terminal, but the scope of the communication device described in the disclosure is not limited thereto, and the structure of the communication device is not limited by FIG. 26. The communication device may be a stand-alone device or may be part of a larger device. For example, the communication device may be:
(1) a stand-alone IC, a chip, a chip system or a subsystem;
(2) a collection of ICs including one or more ICs, in an embodiment of the disclosure, the collection of ICs may also include a storage component for storing data and computer programs;
(3) an ASIC, such as a modem;
(4) a module that can be embedded within other devices;
(5) a receiver, a terminal, a smart terminal, a cellular phone, a wireless device, a handheld machine, a mobile unit, an in-vehicle device, a base station, a cloud device, an artificial intelligence device, and the like; and
(6) others.

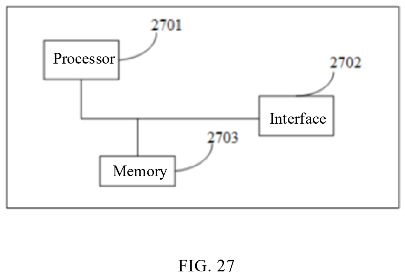

The case that the communication device may be a chip or a chip system can refer to FIG. 27. FIG. 27 is a schematic structural diagram of a chip. The chip shown in FIG. 27 includes a processor 2701 and an interface 2702. There may be one or more processors 2701 and several interfaces 2702.

In an embodiment of the disclosure, the chip also includes a memory 2703 for storing necessary computer programs and data.

It is understood by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be understood as beyond the scope of protection of the embodiments of the disclosure.

The disclosure provides a readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented, in whole or in part, by software, hardware, firmware, or any combination thereof. When implemented using software, the above embodiments may be implemented, in whole or in part, in the form of a computer program product. The computer program product includes one or more computer programs. When loading and executing the computer program on the computer, all or part of processes or functions described in the embodiments of the disclosure are implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., using coaxial cables, fiber optics, or digital subscriber lines (DSLs)) or wirelessly (e.g., using infrared wave, wireless wave, or microwave). The computer-readable storage medium may be any usable medium to which the computer can access or a data storage device integrated by one or more usable mediums, such as a server or a data center. The usable medium may be a magnetic medium (e.g., a floppy disk, a hard disk, and a tape), an optical medium (e.g., a high-density digital video disc (DVD)), or a semiconductor medium (e.g., a solid state disk (SSD)).

Those skilled in the art understand that "first", "second", and other various numerical numbers involved in the disclosure are only described for the convenience of differentiation, and are not used to limit the scope of the embodiments of the disclosure, or used to indicate the order of precedence.

The term "at least one" in the disclosure can be described as one or more, and the term "a plurality of" can be two, three, four or more, which is not limited by the dis closure. In the embodiments of the disclosure, for a type of technical features, "first", "second" and "third", and "A", "B", "C" and "D" are used to distinguish different technical features of the type, the technical features described using the "first", "second" and "third", and "A", "B", "C" and "D" do not indicate any order of precedence or magnitude.

The correspondences in the tables of the disclosure may be configured or predefined. The values of information in the tables are merely examples and may be configured to other values, which are not limited by the disclosure. In configuring the correspondence between the information and the parameter, it is not necessarily required that all the correspondences illustrated in the tables must be configured. For example, the correspondences illustrated in certain rows in the tables of the disclosure may not be configured, and the above tables may be adjusted appropriately, such as splitting, combining, and the like. The names of the parameters shown in the titles of the above tables may be configured to other names that can be understood by the communication device, and the values or representations of the parameters may be other values or representations that can be understood by the communication device. Each of the above tables may also be implemented with other data structures, such as, arrays, queues, containers, stacks, linear tables, pointers, chained lists, trees, graphs, structures, classes, heaps, and Hash tables.

The term "predefine" in the disclosure may be understood as define, predefine, store, pre-store, pre-negotiate, pre-configure, solidify, or pre-fire.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and the design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, the specific working processes of the systems, apparatuses, and units described above can be referred to the corresponding processes in the preceding method embodiments, which will not be repeated herein.

The above are only specific implementations of the disclosure, but the scope of protection of the disclosure is not limited thereto. Those skilled in the art familiar to this technical field can easily think of changes or substitutions in the technical scope disclosed by the disclosure, which shall be covered by the scope of protection of the disclosure. Therefore, the scope of protection of the disclosure shall be governed by the scope of protection of the attached claims.

## Claims

1. A key exchange method, performed by a first device, comprising:
generating a first key pair comprising a first public key and a first private key;
sending the first public key to a server; and
receiving a first public key certificate sent by the server, wherein the first public key certificate comprises a second public key in a second key pair, the second key pair is generated by a second device and comprises the second public key and a second private key, and the second device is a device to be communicated with the first device.

2. The method of claim 1, wherein sending the first public key to the server comprises:
sending a first certificate signing request (CSR) to the server, wherein the first CSR comprises the first public key.

3. The method of claim 1 or 2, further comprising:
verifying the first public key certificate; and
in response to successful verification of the first public key certificate, communicating with the second device based on at least one of the first public key, the first private key, or the second public key comprised in the first public key certificate.

4. The method of claim 3, wherein the first public key certificate is obtained after being signed with a third private key in a third key pair, the third key pair comprises the third private key and a third public key and is generated by the server, and the third public key in the third key pair is preconfigured in the first device and the second device; and
verifying the first public key certificate comprises:
verifying the first public key certificate based on the third public key.

5. The method of claim 1 or 2, further comprising:
receiving a second public key certificate and a third public key certificate sent by the server; wherein the second public key certificate comprises a fourth public key in a fourth key pair, the fourth key pair comprises the fourth public key and a fourth private key and is generated by the server, the second public key certificate is obtained after being signed with a third private key in a third key pair, and the third public key certificate comprises the first public key and is obtained after being signed with the fourth private key.

6. The method of claim 5, further comprising:
obtaining the fourth public key by verifying the second public key certificate based on the third public key; and
verifying the third public key certificate based on the fourth public key.

7. The method of claim 5, further comprising:
sending the second public key certificate and the third public key certificate to the second device.

8. The method of claim 1, further comprising:
determining information associated with a third device, wherein the third device is a device to be authorized by the first device to communicate with the second device;
sending the information associated with the third device to the server;
receiving a fifth public key sent by the server, wherein the fifth public key belongs to a fifth key pair, the fifth key pair comprises the fifth public key and a fifth private key and is generated by the server;
obtaining a fourth public key certificate by signing the fifth public key with the first private key; and
sending the fourth public key certificate to the server.

9. A key exchange method, performed by a server, comprising:
receiving a first public key sent by a first device, wherein the first public key belongs to a first key pair, the first key pair comprises the first public key and a first private key and is generated by the first device;
receiving a second public key sent by a second device, wherein the second public key belongs to a second key pair, the second key pair comprises the second public key and a second private key and is generated by the second device, and the second device is a device to be communicated with the first device;
generating at least one of a first public key certificate, a second public key certificate or a third public key certificate, wherein the first public key certificate comprises the second public key in the second key pair, the second public key certificate comprises a fourth public key in a fourth key pair, and the fourth key pair comprises the fourth public key and a fourth private key, and the third public key certificate comprises the first public key, and the third public key certificate is obtained after being signed with the fourth private key; and
sending at least one of the first public key certificate, the second public key certificate or the third public key certificate to the first device and/or the second device.

10. The method of claim 9, further comprising:
generating a third key pair and the fourth key pair, wherein a third public key of the third key pair is preconfigured in the first device and the second device.

11. The method of claim 9 or 10, wherein the first public key certificate is obtained after being signed with a third private key in the third key pair; and
the second public key certificate is obtained after being signed with the third private key in the third key pair.

12. The method of claim 9, wherein sending at least one of the first public key certificate, the second public key certificate or the third public key certificate to the first device and/or the second device comprises:
in response to the server being able to communicate with the second device, sending the second public key certificate and the third public key certificate to the second device, and sending the first public key certificate, the second public key certificate and the third public key certificate to the first device; or
in response to the server being unable to communicate with the second device, sending the first public key certificate, the second public key certificate and the third public key certificate to the first device.

13. The method of claim 9, further comprising:
receiving information associated with a third device sent by the first device, wherein the third device is a device to be authorized by the first device to communicate with the second device;
generating a fifth key pair, wherein the fifth key pair comprises a fifth public key and a fifth private key;
sending the fifth public key to the first device; and
receiving a fourth public key certificate sent by the first device, wherein the fourth public key certificate comprises the fifth public key, and the fourth public key certificate is obtained by being signed with the first private key in the first key pair.

14. The method of claim 13, further comprising:
sending a key request message to the third device;
receiving a sixth public key sent by the third device, wherein the sixth public key belongs to a sixth key pair, the sixth key pair comprises the sixth public key and a sixth private key, and the sixth key pair is generated by the third device;
obtaining a fifth public key certificate by signing the sixth public key with the fifth private key; and
sending at least one of the first public key certificate, the fourth public key certificate or the fifth public key certificate to the third device and/or the second device.

15. The method of claim 14, wherein sending at least one of the first public key certificate, the fourth public key certificate or the fifth public key certificate to the third device and/or the second device comprises:
in response to the server being able to communicate with the second device, sending the fourth public key certificate and the fifth public key certificate to the second device, and sending the first public key certificate, the fourth public key certificate and the fifth public key certificate to the third device; or
in response to the server being unable to communicate with the second device, sending the first public key certificate, the fourth public key certificate and the fifth public key certificate to the third device.

16. A key exchange method, performed by a second device, comprising:
generating a second key pair, wherein the second key pair comprises a second public key and a second private key;
sending the second public key to a server; and
receiving a second public key certificate and a third public key certificate, wherein the second public key certificate comprises a fourth public key in a fourth key pair, the fourth key pair comprises the fourth public key and a fourth private key, and the fourth key pair is generated by the server, the third public key certificate comprises a first public key in a first key pair, and the first key pair is generated by a first device, the first device is a device to be communicated with the second device, and the third public key certificate is obtained after being signed with the fourth private key.

17. The method of claim 16, further comprising:
verifying the second public key certificate and the third public key certificate; and
in response to successful verification of the second public key certificate and the third public key certificate, communicating with the first device based on at least one of the second private key, the second public key or the first public key comprised in the third public key certificate.

18. The method of claim 17, wherein the second public key certificate is obtained after being signed with a third private key in a third key pair;
wherein the third key pair comprises the third private key and a third public key, the third key pair is generated by the server, and the third public key in the third key pair is preconfigured in the first device and the second device; and
verifying the second public key certificate and the third public key certificate comprises:
obtaining the fourth public key by verifying the second public key certificate based on the third public key; and
verifying the third public key certificate based on the fourth public key.

19. The method of claim 16, wherein receiving the second public key certificate and the third public key certificate comprises:
receiving the second public key certificate and the third public key certificate sent by the first device and/or the server.

20. The method of claim 16, further comprising:
receiving a fourth public key certificate and a fifth public key certificate, wherein the fourth public key certificate comprises a fifth public key belonging to a fifth key pair; the fifth key pair comprises the fifth public key and a fifth private key, the fifth key pair is generated by the server; the fourth public key certificate is obtained after being signed with a first private key in the first key pair, the fifth public key certificate comprises a sixth public key belonging to a sixth key pair, the sixth key pair comprises the sixth public key and a sixth private key, and the sixth key pair is generated by a third device, the third device is a device to be authorized by the first device to communicate with the second device, and the fifth public key certificate is obtained after being signed with the fifth private key;
verifying the fourth public key certificate and the fifth public key certificate; and
in response to successful verification of the fourth public key certificate and the fifth public key certificate, communicating with the third device based on at least one of the second private key, the second public key and the sixth public key comprised in the fifth public key certificate.

21. The method of claim 20, wherein verifying the fourth public key certificate and the fifth public key certificate comprises:
obtaining the fifth public key by verifying the fourth public key certificate based on the first public key; and
verifying the fifth public key certificate based on the fifth public key.

22. The method of claim 20, wherein receiving the fourth public key certificate and the fifth public key certificate comprises:
receiving the fourth public key certificate and the fifth public key certificate sent by the third device and/or the server.

23. A key exchange method, performed by a third device, comprising:
receiving a key request message sent by a server;
generating a sixth key pair, wherein the sixth key pair comprises a sixth public key and a sixth private key;
sending the sixth public key to the server; and
receiving a first public key certificate sent by the server, wherein the first public key certificate comprises a second public key in a second key pair, the second key pair is generated by a second device and comprises the second public key and a second private key, and the second device is a device to be communicated with the third device.

24. The method of claim 23, further comprising:
verifying the first public key certificate; and
in response to successful verification of the first public key certificate, communicating with the second device based on at least one of the sixth public key, the sixth private key or the second public key comprised in the first public key certificate.

25. The method of claim 24, wherein the first public key certificate is obtained after being signed with a third private key in a third key pair, the third key pair comprises the third private key and a third public key and is generated by the server, and the third public key in the third key pair is preconfigured in the third device and the second device; and
verifying the first public key certificate comprises:
verifying the first public key certificate based on the third public key.

26. The method of claim 23, further comprising:
receiving a fourth public key certificate and a fifth public key certificate sent by the server, wherein the fourth public key certificate comprises a fifth public key belonging to a fifth key pair; the fifth key pair comprises the fifth public key and a fifth private key, and the fifth key pair is generated by the server, the fourth public key certificate is obtained after being signed with a first private key in a first key pair, the fifth public key certificate comprises the sixth public key; and the fifth public key certificate is obtained after being signed with the fifth private key.

27. The method of claim 26, further comprising:
obtaining the fifth public key by verifying the fourth public key certificate based on a pre-acquired first public key; and
verifying the fifth public key certificate based on the fifth public key.

28. The method of claim 26, further comprising:
sending the fourth public key certificate and the fifth public key certificate to the second device.

29. A communication apparatus, comprising:
a processing module, configured to generate a first key pair comprising a first public key and a first private key;
a transceiver module, configured to send the first public key to a server; and
the transceiver module, further configured to receive a first public key certificate sent by the server, wherein the first public key certificate comprises a second public key in a second key pair, the second key pair is generated by a second device and comprises the second public key and a second private key, and the second device is a device to be communicated with a first device.

30. A communication apparatus, comprising:
a transceiver module, configured to receive a first public key sent by a first device, wherein the first public key belongs to a first key pair, the first key pair comprises the first public key and a first private key and is generated by the first device;
the transceiver module, further configured to receive a second public key sent by a second device, wherein the second public key belongs to a second key pair, the second key pair comprises the second public key and a second private key and is generated by the second device, and the second device is a device to be communicated with the first device;
a processing module, configured to generate at least one of a first public key certificate, a second public key certificate or a third public key certificate, wherein the first public key certificate comprises the second public key in the second key pair, the second public key certificate comprises a fourth public key in a fourth key pair, and the fourth key pair comprises the fourth public key and a fourth private key, and the third public key certificate comprises the first public key, and the third public key certificate is obtained after being signed with the fourth private key; and
the transceiver module, further configured to send at least one of the first public key certificate, the second public key certificate or the third public key certificate to the first device and/or the second device.

31. A communication apparatus, comprising:
a processing module, configured to generate a second key pair, wherein the second key pair comprises a second public key and a second private key;
a transceiver module, configured to send the second public key to a server; and
the transceiver module, further configured to receive a second public key certificate and a third public key certificate, wherein the second public key certificate comprises a fourth public key in a fourth key pair; the fourth key pair comprises the fourth public key and a fourth private key, and the fourth key pair is generated by the server; the third public key certificate comprises a first public key in a first key pair, and the first key pair is generated by a first device, the first device is a device to be communicated with a second device, and the third public key certificate is obtained after being signed with the fourth private key.

32. A communication apparatus, comprising:
a transceiver module, configured to receive a key request message sent by a server;
a processing module, configured to generate a sixth key pair, wherein the sixth key pair comprises a sixth public key and a sixth private key;
the transceiver module, further configured to send the sixth public key to the server; and
the transceiver module, further configured to receive a first public key certificate sent by the server, wherein the first public key certificate comprises a second public key in a second key pair, the second key pair is generated by a second device and comprises the second public key and a second private key, and the second device is a device to be communicated with the third device.

33. A communication device, comprising a processor and a memory, wherein the memory stores computer programs, and the processor executes the computer programs stored in the memory to cause the device to implement the method according to any one of claims 1-8, the method according to any one of claims 9-15, the method according to any one of claims 16-22, or the method according to any one of claims 23-28.

34. A communication device, comprising a processor and an interface circuit, wherein
the interface circuit is configured to receive code instructions and transmit the code instructions to the processor;
the processor is configured to implement the method according to any one of claims 1-8, the method according to any one of claims 9-15, the method according to any one of claims 16-22, or the method according to any one of claims 23-28 by executing the code instructions.

35. A computer-readable storage medium for storing instructions, wherein when the instructions are executed, the method according to any one of claims 1-8, the method according to any one of claims 9-15, the method according to any one of claims 16-22, or the method according to any one of claims 23-28 is implemented.
